# EUROPÄISCHE PATENTANMELDUNG

(11) **EP 3 166 164 A1**
(43) Veröffentlichungstag der Anmeldung: **10.05.2017**
(21) Anmeldenummer: 15193298.5
(22) Anmeldetag: 05.11.2015
(51) Int. Cl.: H01M 4/13, H01M 10/052, H01M 10/0567, H01M 10/42

(54) **VERFAHREN ZUR HERSTELLUNG EINER LITHIUM-IONEN-BATTERIE UND LITHIUM-IONEN-BATTERIE**

(71) Anmelder: Lithium Energy and Power GmbH & Co. KG, 70469 Stuttgart (DE)
(72) Erfinder: Masuda, Hedeki, Osaka 532-0026 (JP); Kawasoe, Yudai, Kyoto 600-8825 (JP); Katsumata, Yutaro, Kyoto 602-8072 (JP); Wilka, Marcel, Kyoto 602-0802 (JP)
(74) Vertreter: Bee, Joachim

(57) **Zusammenfassung**

Die Erfindung betrifft eine Lithium-Ionen-Batterie, umfassend mindestens eine Batteriezelle (2), wobei die Batteriezelle (2) je eine negative Elektrode (21), eine positive Elektrode (22), eine Elektrolytzusammensetzung (15) und einen Separator (18) umfasst, dadurch gekennzeichnet, dass die Lithium-Ionen-Batterie ferner mindestens eine Schnellentladungsvorrichtung (61) umfasst und die Oberfläche der negativen und/oder der positiven Elektrode (21, 22) mit einem Material beschichtet ist, welches einen elektrischen Widerstand von mehr als 0 Ω cm² und eine Lithiumlonenleitfähigkeit von mehr als 0 S/cm aufweist und welches unter den Betriebsbedingungen der Lithium-Ionen-Batterie in der Elektrolytzusammensetzung (15) eine Löslichkeit von weniger als 1 g/L aufweist.

Die Erfindung betrifft zudem Verfahren zur Herstellung solcher Lithium-Ionen-Batterien.

## Beschreibung

Mobilität spielt bei modernen elektrischen Geräten zunehmend eine große Rolle. Nicht nur von elektronischen Kleingeräten wie Mobiltelefonen, Navigationssystemen, usw. wird eine mobile und leistungsstarke Energieversorgung erwartet. Auch Kraftfahrzeuge setzten vermehrt auf eine von fossilen Brennstoffen unabhängige Versorgung. Aufgrund des hohen Gewichts dieser Geräte ist es notwendig, sowohl leistungsstarke Batterien für diese Anwendungen bereitzustellen, als auch deren Gewicht zu reduzieren.

In den vergangenen Jahren haben sich Lithium-Ionen-Batterien in diesem Bereich als besonders vielversprechend herausgestellt, da sich diese durch besonders hohe Energiedichten auszeichnen. Außerdem sind Lithium-Ionen-Batterien vorteilhaft, da sie praktisch keinen Speichereffekt kennen und auch die Selbstentladung der Zelle vergleichsweise gering ist. Dennoch stehen der Anwendung dieser Batterien immer wieder Bedenken gegenüber, da es im Fall fehlerhafter Anwendung, wie übermäßiger Be- oder Entladung, oder im Fall einer mechanischen Beschädigung zu unkontrollierter Wärmeentwicklung (sog. thermisches Durchgehen) bis hin zu Bränden oder Explosionen kommen kann. Dies stellt ein hohes Sicherheitsrisiko dar, sodass diese Batterien trotz ihrer Vorteile in sicherheitsrelevanten Bereichen wie z.B. der Luftfahrt nur eingeschränkt zum Einsatz kommen.

Im Stand der Technik sind verschiedene Systeme beschrieben, welche die von Lithium-Ionen-Batterien ausgehenden Gefahren minimieren sollen. Zu nennen sind hier insbesondere Schutzschaltungen, welche bei einem ungewöhnlichen Temperaturanstieg den Stromfluss reversibel unterbrechen können, und Sicherheitsventile, welche den Batterieinnendruck verfolgen und die Entladung notfalls unterbrechen können. Ferner zu nennen sind die Separatoren, welche in Abhängigkeit von der Temperatur die positiven und negativen Elektroden irreversibel voneinander trennen können. Diese Maßnahmen sind dem Fachmann bekannt.

Dennoch kann es passieren, dass es durch mechanische Belastung zu Schäden in den Lithium-Ionen-Batterien kommt, sodass ein lokaler Kurzschluss zwischen den Elektroden auftritt. Dies führt zu einer starken lokalen Erwärmung der Zelle, welche Brände und Explosionen nach sich ziehen kann.

Aufgabe dieser Erfindung ist es daher, eine Lithium-Ionen-Batterie bereit zu stellen, bei der die Gefahr einer sicherheitskritischen Erwärmung der Zelle im Fall einer mechanischen Beschädigung der Zellen oder eines lokalen Kurzschlusses zwischen einzelnen Elektroden effektiv verringert werden kann. Weiterhin ist es Aufgabe dieser Erfindung, ein Verfahren bereitzustellen, mit dem eine solche Lithium-Ionen-Batterie hergestellt werden kann. Diese Aufgaben werden durch die Gegenstände der vorliegenden Erfindung gelöst.

### Offenbarung der Erfindung

Die vorliegende Erfindung betrifft eine Lithium-Ionen-Batterie, umfassend mindestens eine Batteriezelle, wobei die Batteriezelle je eine negative Elektrode, eine positive Elektrode, eine Elektrolytzusammensetzung und einen Separator umfasst, dadurch gekennzeichnet, dass die Lithium-Ionen-Batterie ferner mindestens eine Schnellentladungsvorrichtung umfasst und die Oberfläche der negativen und/oder der positiven Elektrode mit einem Material beschichtet ist, welches einen elektrischen Widerstand von mehr als 0 Ω cm² und eine Lithium-Ionenleitfähigkeit von mehr als 0 S/cm aufweist und welches unter den Betriebsbedingungen der Lithium-Ionen-Batterie in der Elektrolytzusammensetzung eine Löslichkeit von weniger als 1 g/L aufweist.

Die erfindungsgemäße Schnellentladungsvorrichtung, auch Fast-Discharge-Device genannt, ist eine Vorrichtung, die es ermöglicht, die Elektroden einer Lithium-Ionen-Batterie über einen sehr geringen Widerstand kurzzuschließen. Die Schnellentladungsvorrichtung verbindet dabei bevorzugt das positive und das negative Terminal der Batteriezelle bzw. der Lithium-Ionen-Batterie. Die Schnellentladungsvorrichtung umfasst ein elektrisches Bauteil mit einem sehr niedrigen elektrischen Wiederstand von 0,1 bis 200 µΩ, vorzugsweise von 50 bis 150 µΩ. Im Falle eines kritischen Verhaltens einer Batteriezelle oder der Lithium-Ionen-Batterie (nachfolgend auch als Schadensfall bezeichnet), beispielsweise wenn es zu einem Kontakt der Elektroden nach Beschädigung der Zelle(n) und/oder des Separators kommt, wird die Schnellentladungsvorrichtung ausgelöst. Dabei ist eine möglichst rasche Aktivierung wichtig, da nur so ein schnelles Aufheizen der Zelle durch unkontrolliertes Entladen an der Schadstelle unterbunden werden kann.

Typische Aktivierungszeiten der erfindungsgemäßen Schnellentladungsvorrichtung liegen im Bereich von 0,01 bis 500 ms, bevorzugt im Bereich von 0,1 bis 250 ms, beispielsweise bei 70 bei 130 ms. Die Aktivierung der Schnellentladungsvorrichtung führt zu einer starken Polarisation der Elektroden und somit zu einem starken Spannungsabfall der Vollzelle auf ca. 0 V. Durch den sehr geringen Kurzschlusswiderstand der Schnellentladung im Vergleich zu dem deutlich höheren Schadstellenwiderstand (sog. "Damage Zone Resistance") fließen nur noch sehr geringe Ströme durch die Schadstelle. Zusammen mit der sehr geringen Vollzell-Spannung kommt es nur noch zu einer sehr geringen lokal Erwärmung. Die Schnellentladung selbst führt gleichzeitig zu einer globalen Erwärmung der defekten Zelle bzw. der defekten Batterie. Die globale Temperatur steigt dabei auf eine Temperatur von 100 bis 200°C, vorzugsweise auf eine Temperatur von 130 bis 170°C, insbesondere auf eine Temperatur von 140 bis 160°C. Dies führt zu einem Schließen des Separators (sog. "Separator-Shut-Down") indem dessen Poren durch den Temperaturanstieg verschmelzen und dieser so seine Ionen-Leitfähigkeit verliert. Das Verschließen des Separators tritt bevorzugt innerhalb von 1 bis 60 Sekunden nach dem Eintritt des Schadensfalls ein, insbesondere innerhalb von 5 bis 30 Sekunden. Somit kommt es rasch zum Abschalten der Lithium-Ionen-Batterie. Nach dem Abschalten der Lithium-Ionen-Batterie durch den Separator ist die Batterie in einem nahezu sicheren Zustand, da keine weiteren elektrochemischen Reaktionen auftreten können und somit kein weiterer Strom fließen kann.

In einigen Fällen kann es jedoch vorkommen, dass diese Entladung nicht vollständig oder nicht rechtzeitig stattfindet oder selbst ein geringer Schadstellenstrom zu einer starken lokalen Erwärmung führt. Dies kann insbesondere bei Lithium-Ionen-Batterien mit hohem Nickel-Gehalt im Elektrodenmaterial der Fall sein. Auch bei niedrigen Kurzschluss-Strömen kann die dadurch hervorgerufene lokale Erwärmung zu einem Brand oder einer Explosion führen. Obwohl die Schnellentladungsvorrichtung die Sicherheit von Lithium-Ionen-Batterie erhöht, ist es daher nicht möglich jede Art von Zelle durch Entladung in eine vollständig sichere Zelle zu überführen. Aus diesem Grund umfasst die erfindungsgemäße Lithium-Ionen-Batterie ferner mindestens eine Elektrode, deren Oberfläche mit einem Material beschichtet ist, welches einen elektrischen Widerstand von mehr als 0 Ω cm² und eine Lithium-Ionenleitfähigkeit von mehr als 0 S/cm aufweist und welches unter den Betriebsbedingungen der Lithium-Ionen-Batterie in der Elektrolytzusammensetzung eine Löslichkeit von weniger als 1 g/L aufweist.

In einer Ausführungsform betrifft die Erfindung eine Lithium-Ionen-Batterie, wobei das Beschichtungsmaterial mindestens ein polymerisierbares Material umfasst, welches bei Anlegen einer Spannung an die positiven und/oder der negativen Elektroden der Lithium-Ionen-Batterie auf der Oberfläche der positiven und/oder der negativen Elektrode oligomere und/oder polymere Strukturen ausbildet und so eine Beschichtungsschicht bildet, welche unter den Betriebsbedingungen der Lithium-Ionen-Batterie in der Elektrolytzusammensetzung eine Löslichkeit von weniger als 1 g/L aufweist.

In einer weiteren Ausführungsform betrifft die Erfindung eine Lithium-Ionen-Batterie, wobei das mindestens eine polymerisierbare Material ausgewählt ist aus den in der nachfolgenden Beschreibung definierten Verbindungen (1) bis (16), wobei diese einzeln oder in Kombination miteinander verwendet werden können.

In einer Ausführungsform betrifft die Erfindung eine Lithium-Ionen-Batterie, wobei die positive Elektrode mindestens ein positives Aktivmaterial umfasst, welches ein zusammengesetztes Oxid, das mindestens ein Metall, ausgewählt aus der Gruppe bestehend aus Kobalt, Magnesium und Nickel, sowie Lithium, enthält, umfasst.

In einer Ausführungsform betrifft die Erfindung eine Lithium-Ionen-Batterie, wobei das positive Aktivmaterial eine Verbindung der Formel LiNi₁₋ₓM'ₓO₂ mit x ≤ 0,5 umfasst und wobei M' ausgewählt ist aus Co, Mn, Cr und Al.

Gegenstand der Erfindung ist auch ein Verfahren zur Herstellung einer Lithium-Ionen-Batterie, umfassend mindestens eine Schnellentladungsvorrichtung und mindestens eine Batteriezelle, wobei das Verfahren die folgenden Schritte umfasst:
(a) Beschichten der Oberfläche einer positiven und/oder einer negativen Elektrode mit einem Beschichtungsmaterial, welches mindestens ein Material umfasst, das bei Betriebstemperatur der Lithium-Ionen-Batterie eine Löslichkeit in der Elektrolytzusammensetzung von weniger als 1 g/L aufweist;
(b) Zusammenfügen der in Schritt (a) erhaltenen, gegebenenfalls beschichteten negativen und positiven Elektroden mit mindestens den weiteren Bestandteilen Separator und Elektrolytzusammensetzung, umfassend mindestens ein aprotisches Lösungsmittel und mindestens ein Lithiumsalz, um so eine Batteriezelle zu erhalten;
(c) Zusammenfügen der in Schritt (b) erhaltenen Batteriezelle mit mindestens einer Schnellentladungsvorrichtung sowie gegebenenfalls weiteren Batteriezellen, um so eine Lithium-Ionen-Batterie zu erhalten;
(d) Mindestens einmaliges Aufladen und Entladen der so erhaltenen Batterie, um die Lithium-Ionen-Batterie zu Formieren.

In einer Ausführungsform betrifft die Erfindung ein solches Verfahren zur Herstellung einer Lithium-Ionen-Batterie, wobei die Elektrolytzusammensetzung ferner mindestens ein Elektrolyt-Additiv, ausgewählt aus den in der Beschreibung definierten Verbindungen (1) bis (16) umfasst.

Ferner hat die Erfindung Verfahren zur Herstellung einer Lithium-Ionen-Batterie, umfassend mindestens eine Schnellentladungsvorrichtung und mindestens eine Batteriezelle, zum Gegenstand, wobei das Verfahren die folgenden Schritte umfasst:
(a) Zusammenfügen der Bestandteile negative Elektrode, positive Elektrode, Separator und Elektrolytzusammensetzung, um so eine Batteriezelle zu erhalten, wobei die Elektrolytzusammensetzung mindestens ein Elektrolyt-Additiv, ausgewählt aus den in der Beschreibung definierten Verbindungen (1) bis (16), umfasst;
(b) Zusammenfügen der in Schritt (a) erhaltenen Batteriezelle mit mindestens einer Schnellentladungsvorrichtung sowie gegebenenfalls weiteren Batteriezellen, um eine Lithium-Ionen-Batterie zu erhalten;
(c) Mindestens einmaliges Aufladen und Entladen der so erhaltenen Batterie, um die Lithium-Ionen-Batterie zu Formieren und so eine Beschichtungsschicht auf der Oberfläche der positiven und/oder der negativen Elektrode zu bilden, wobei diese Schicht elektrochemische Reaktionsprodukte der in Schritt (a) zugegebenen Verbindungen (1) bis (16) umfasst.

Die Erfindung betrifft auch eine Lithium-Ionen-Batterie umfassend mindestens eine Schnellentladungsvorrichtung und mindestens eine Batteriezelle, hergestellt nach einem der beschriebenen Verfahren.

Gegenstand der Erfindung ist auch die Verwendung einer Elektrolytzusammensetzung, umfassend mindestens ein aprotisches Lösungsmittel, mindestens ein Lithiumsalz und mindestens ein Elektrolyt-Additiv, ausgewählt aus den in der Beschreibung definierten Verbindungen (1) bis (16) in einer Lithium-Ionen-Batterie, umfassend mindestens eine Schnellentladungsvorrichtung und mindestens eine Batteriezelle, wobei die Batteriezelle je eine negative Elektrode, eine positive Elektrode, eine Elektrolytzusammensetzung und einen Separator umfasst.

### Vorteile

Durch die Beschichtung der Oberflächen der negativen und/oder der positiven Elektroden wird die Gefahr eines Kurzschlusses zwischen den Elektroden reduziert wird. Sollte dennoch ein Elektrodenkurzschluss auftreten, so wird der Kontaktwiderstand zwischen den Elektroden durch die Oberflächenbeschichtung erhöht und damit die Gefahr des unkontrollierten Erwärmens der Lithium-Ionen-Batterie effektiv reduziert.

Ferner wird durch die Verwendung der erfindungsgemäßen Beschichtungen für die positive und negative Elektrode der Diffusionswiderstand erhöht. Dies führt zu einer Erhöhung der Elektroden-Polarisation während der Schnellentladung. Dadurch wird der Vollzellspannungsabfall verstärkt, was zur Folge hat, dass die lokale Erwärmung geringer ausfällt.

Schließlich ist als weiterer Vorteil der erfindungsgemäßen Oberflächenbeschichtung zu nennen, dass hierdurch die Reaktionen zwischen den Elektroden und der Elektrolytzusammensetzung, welche gegebenenfalls zu einem sehr schnellen und sehr starken lokalen Temperaturanstieg in der Lithium-Ionen-Batterie führen kann, zu höheren Temperaturen verschoben wird. Somit ist die der erfindungsgemäßen Lithium-Ionen-Batterie innewohnende intrinsische Sicherheit gegenüber herkömmlichen Lithium-Ionen-Batterien auch ohne die Schnellentladungsvorrichtung bereits erhöht.

Durch die beschriebenen Vorteile der Erfindung können in Verbindung mit der erfindungsgemäßen Schnellentladungsvorrichtung auch unsichere Elektrodenmaterialien, wie Nickel-reiche Aktivmaterialien, sicherer verwendet werden.

### Zeichnungen

Ausführungsbeispiele der Erfindung werden im Folgenden anhand von Zeichnungen näher erläutert.

Es zeigen:
- Figur 1: eine schematische Darstellung einer Batteriezelle,
- Figur 2: eine schematisch Darstellung eines Kurzschlusses während eines Nageltests, sog. "Nail Penetration",
- Figur 3: die Änderung der Temperatur und des Stromflusses einer erfindungsgemäßen Lithium-Ionen Batterie während der Schnellentladung ("Fast Discharge") und des Nageltests,
- Figur 4: das Spannungs- und Strom-Verhalten einer Lithium-Ionen Batterie mit Schnellentladungsvorrichtung während der Schnellentladung ("Fast Discharge") und des Nageltests ohne zusätzliche Beschichtung der Elektrode.

Die Bestandteile der erfindungsgemäßen Lithium-Ionen-Batterie werden nachfolgend im Einzelnen beschrieben.

### Positive Elektrode

Als positive Elektrode kann jede dem Fachmann bekannte, für Lithium-Ionen-Batteriezellen geeignete positive Elektrode verwendet werden. In der Regel umfasst eine positive Elektrode ein sogenanntes positives Aktivmaterial, welches ein elektrisch leitendes Material umgibt. Als elektrisch leitendes Material ist jedes Material geeignet, welches eine Leitfähigkeit von > 10⁶ S/m bei 25°C aufweist. Insbesondere geeignet sind Metalle, sowie Legierungen davon. Bevorzugt ist das elektrisch leitende Material der positiven Elektrode Aluminium. Dieses Material dient als Stromabnehmer.

Das positive Aktivmaterial dient als Ort der elektrochemischen Reaktion. Geeignete Materialien sind dem Fachmann bekannt. Eine Übersicht geben M. Yoshio und H. Noguchi in "Lithium-Ion Batteries - Science and Technologies", M. Yoshio, R. J. Brodd, A. Kozawa (Herausgeber), Kapitel 2, Seite 9 bis 48; Springer Science+Business Media, LLC 2009. Alle dem Fachmann bekannten positiven Aktivmaterialien sind zur Verwendung im Sinne der vorliegenden Erfindung geeignet. Insbesondere umfasst das positive Aktivmaterial lithiierte Interkalationsverbindungen, welche in der Lage sind Lithium-Ionen reversibel aufzunehmen und freizusetzen. Das positive Aktivmaterial kann ein zusammengesetztes Oxid umfassen, welches mindestens ein Metall, ausgewählt aus der Gruppe bestehend aus Kobalt, Magnesium, Nickel, sowie Lithium, enthält.

Insbesondere können Lithium-haltige Verbindungen der nachfolgenden Formeln verwendet werden, welche in EP 2 498 329 A1 beschrieben sind:
LiₐA_{1-b}R_{b}D₂ mit 0,90 ≤ a ≤ 1,8 und 0 ≤ b ≤ 0,5; LiₐE_{1-b}R_{b}O_{2-c}D_{c} mit 0,90 ≤ a ≤ 1,8, 0 ≤ b ≤ 0,5 und 0 ≤ c ≤ 0,05; LiE_{2-b}R_{b}O_{4-c}D_{c} mit 0 ≤ b ≤ 0,5, und 0 ≤ c ≤ 0,05; LiₐNi_{1-b-c}Co_{b}R_{c}D_{α} mit 0,90 ≤ a ≤ 1,8, 0 ≤ b ≤ 0,5, 0 ≤ c ≤ 0,05 und 0 < α ≤ 2; LiₐNi_{1-b-c}Co_{b}R_{c}O_{2-α}Z_{α} mit 0,90 ≤ a ≤ 1,8, 0 ≤ b ≤ 0,5, 0 ≤ c ≤ 0,05 und 0 < α < 2; LiₐNi_{1-b-c}Co_{b}R_{c}O_{2-c}Z₂ mit 0,90 ≤ a ≤ 1,8, 0 ≤ b ≤ 0,5, 0 ≤ c ≤ 0,05 und 0 < α < 2; LiₐNi_{1-b-c}Mn_{b}R_{c}D_{α} mit 0,90 ≤ a ≤ 1,8, 0 ≤ b ≤ 0,5, 0 ≤ c ≤ 0,05 und 0 < α ≤ 2; LiₐNi_{1-b-c}Mn_{b}R_{c}O_{2-α}Z_{α} mit 0,90 ≤ a ≤ 1,8, 0 ≤ b ≤ 0,5, 0 ≤ c ≤ 0,05 und 0 < α < 2; LiₐNi_{1-b-c}Mn_{b}R_{c}O_{2-α}Z₂ mit 0,90 ≤ a ≤ 1,8, 0 ≤ b ≤ 0,5, 0 ≤ c ≤ 0,05 und 0 < α < 2; LiₐNi_{b}E_{c}G_{d}O₂ mit 0,90 ≤ a ≤ 1,8, 0 ≤ b ≤ 0,9, 0 ≤ c ≤ 0,5 und 0,001 ≤ d ≤ 0,1; LiₐNi_{b}Co_{c}Mn_{d}GₑO₂ mit 0,90 ≤ a ≤ 1,8, 0 ≤ b ≤ 0,9, 0 ≤ c ≤ 0,5, 0 ≤ d ≤ 0,5 und 0,001 ≤ e ≤ 0,1; LiₐNiG_{b}O₂ mit 0,90 ≤ a ≤ 1,8 und 0,001 ≤ b ≤ 0,1; LiₐCoG_{b}O₂ mit 0,90 ≤ a ≤ 1,8 und 0,001 ≤ b ≤ 0,1; LiₐMnG_{b}O₂ mit 0,90 ≤ a ≤ 1,8 und 0,001 ≤ b ≤ 0,1; LiₐMn₂G_{b}O₄ mit 0,90 ≤ a ≤ 1,8 und 0,001 ≤ b ≤ 0,1; QO₂; QS₂; LiQS₂; V₂O₅; LiV₂O₅; LiTO₂; LiNiVO₄; Li_{(3-f)}J₂(PO₄)₃ mit 0 ≤ f ≤ 2; Li_{(3-f)}Fe₂(PO₄)₃ mit 0 ≤ f ≤ 2; und LiFePO₄.

In den obigen Formeln ist A ausgewählt aus Ni, Co, Mn und Kombinationen davon; R ist ausgewählt aus Al, Ni, Co, Mn, Cr, Fe, Mg, Sr, V, einem Seltenerdelement und Kombinationen davon; D ist ausgewählt aus O, F, S, P und Kombinationen davon; E ist ausgewählt aus Co, Mn und Kombinationen davon; Z ist ausgewählt aus F, S, P und Kombinationen davon; G ist ausgewählt ist aus Al, Cr, Mn, Fe, Mg, La, Ce, Sr, V und Kombinationen davon; Q ist ausgewählt aus Ti, Mo, Mn und Kombinationen davon; T ist ausgewählt aus Cr, V, Fe, Sc, Y, und Kombinationen davon; und J ist ausgewählt aus V, Cr, Mn, Co, Ni, Cu und Kombinationen davon.

Eine Ausführungsform der vorliegenden Erfindung enthält ein positives Aktivmaterial, umfassend eine Verbindung der Formel LiMO₂, wobei M ausgewählt ist aus Co, Ni, Mn, Cr oder Gemischen von diesen sowie Gemischen von diesen mit Al. In einer bevorzugten Ausführungsform handelt es sich bei dem positiven Aktivmaterial um ein Material, welches Nickel umfasst, d.h. LiNi₁₋ₓM'ₓO₂, wobei M' ausgewählt ist aus Co, Mn, Cr und Al und 0 ≤ x < 1 ist. Beispiele umfassen Lithium-Nickel-Kobalt-AluminiumOxid-Kathoden (z.B. LiNi_{0,8}Co_{0,15}Al_{0,05}O₂; NCA) und Lithium-Nickel-Mangan-KobaltOxid-Kathoden (z.B. LiNi_{0,8}Mn_{0,1}Co_{0,1}O₂; NMC (811) oder LiNi_{0,33}Mn_{0,33}Co_{0,33}O₂; NMC (111)). Besonders bevorzugt sind Lithium-Zellen mit hohem Nickel-Anteil im Aktivmaterial, ganz besonders bevorzugt Zellen, umfassend ein positives Aktivmaterial, welches eine Verbindung der Formel LiNi₁₋ₓM'ₓO₂ mit x ≤ 0,5 wobei M' ausgewählt ist aus Co, Mn, Cr und Al, umfasst. Insbesondere bevorzugt sind NCA und NMC (811), da diese sich als außerordentlich unsicher erwiesen haben, aber zeitgleich auch aufgrund ihrer hohen spezifischen Kapazität für Hochenergiespeicher besonders interessant sind und somit besonders von den technischen Effekten der Erfindung profitieren. Ferner sind als bevorzugte positive Aktivmaterialien überlithiierte schichtförmige Oxide zu nennen, welche dem Fachmann bekannt sind. Beispiele hierfür sind Li₁₊ₓMn_{2-y}M_{y}O₄ mit x ≤ 0,8, y < 2; Li₁₊ₓCo_{1-y}M_{y}O₂ mit x ≤ 0,8, y < 1; Li₁₊ₓNi_{1-y-z}Co_{y}M_{z}O₄ mit x ≤ 0,8, y < 1, z < 1 und y+z < 1. In den vorgenannten Verbindungen kann M ausgewählt sein aus Al, Mg und/oder Mn. Ferner sind insbesondere Li₂MnO₃, Li_{1.17}Ni_{0.17}Co_{0.1}Mn_{0.56}O2, LiCoO₂ und LiNiO₂ als geeignete positive Aktivmaterialien hervorzuheben.

Zwei oder mehrere der positiven Aktivmaterialien können insbesondere auch in Kombination miteinander verwendet werden. Eine bevorzugte Ausführungsform umfasst beispielsweise Verbindungen der Formel n(Li₂MnO₃) : n-1(LiNi₁₋ₓM'ₓO₂) wobei M' ausgewählt ist aus Co, Mn, Cr und Al und 0 < n < 1 ist und 0 < x < 1 ist.

Als weitere Bestandteile kann das positive Aktivmaterial insbesondere Bindemittel und elektrisch leitende Zusätze umfassen. Eine Übersicht über geeignete Bindemittel geben H. Yamamoto und H. Mori in "Lithium-Ion Batteries - Science and Technologies", M. Yoshio, R. J. Brodd, A. Kozawa (Herausgeber), Kapitel 7, Seite 163 bis 180; Springer Science+Business Media, LLC 2009. Beispiele für Bindemittel umfassen mindestens eine Verbindung, ausgewählt aus Polyvinylalkohol, Carboxylmethylcellulose, Hydroxymethylcellulose, Polyvinylchlorid, carboxyliertes Polyvinylchlorid, Polyvinylfluorid, Ethylenoxid-haltige Polymere, Polyvinylpyrrolidon, Polyurethan, Polytetrafluorethen, Polyvinylidenfluorid, Polyethylen, Polypropylen, Ethylen-Propylen-Dien-Terpolymer, Styrol-Butadien-Copolymere, Acrylnitril-Butadien-Styrol-Copolymere, Epoxidharze, Polyamide und ähnliches. Als Bindemittel sind besonders Styrol-Butadien-Copolymer (SBR), Polyvinylidenfluorid (PVdF), Polytetrafluorethen (PTFE) und Ethylen-Propylen-Dien-Terpolymer (EPDM), insbesondere Polyvinylidenfluorid (PVdF) und Polytetrafluorethen (PTFE), als bevorzugt hervorzuheben. Als elektrisch leitender Zusatz ist insbesondere Ruß (Carbon Black, Acetylene Black) zu nennen. Die Menge an Bindemittel und elektrisch leitenden Zusätzen kann jeweils bis zu 15 Gew.-% des Aktivmaterials ausmachen, bevorzugt jeweils 1 bis 10 Gew.-%.

Die positive Elektrode kann durch ein Verfahren hergestellt werden, in dem das positive Aktivmaterial mit dem elektrisch leitenden Zusatz und dem Bindemittel sowie gegebenenfalls einem Lösungsmittel (z.B. N-Methylpyrrolidon) zu einer Aktivmaterialzusammensetzung vermischt und dann auf den Stromabnehmer aufgebracht werden. Solche Verfahren sind dem Fachmann bekannt und werden daher hier nicht näher beschrieben. Die Flächenbelegung des Stromabnehmers mit dem Aktivmaterial beträgt 1 bis 50 mg/cm², insbesondere 5 bis 20 mg/cm².

### Negative Elektrode

Als negative Elektrode kann jede dem Fachmann bekannte, für Lithium-Ionen-Batteriezellen geeignete negative Elektrode verwendet werden. In der Regel umfasst eine negative Elektrode ein sogenanntes negatives Aktivmaterial, welches ein elektrisch leitendes Material umgibt. Als elektrisch leitendes Material ist jedes Material geeignet, welches eine Leitfähigkeit von > 10⁶ S/m bei 25°C aufweist. Insbesondere geeignet sind Metalle, sowie Legierungen davon. Bevorzugt ist das elektrisch leitende Material der negativen Elektrode Kupfer. Dieses Material dient als Stromabnehmer.

Das negative Aktivmaterial dient als Ort der elektrochemischen Reaktion. Es werden in der Literatur viele geeignete Materialien beschrieben, von denen sich besonders auf Kohlenstoff basierenden Anoden durchgesetzt haben, und dabei vor allem die Interkalationsverbindung des Graphits, d.h. Verbindungen, die eine Graphitstruktur aufweisen und geeignet sind Lithium-Ionen einzulagern und freizusetzen. Geeignete Materialien sind dem Fachmann bekannt. Eine Übersicht geben Z. Ogumi und H. Wang in "Lithium-Ion Batteries - Science and Technologies", M. Yoshio, R. J. Brodd, A. Kozawa (Herausgeber), Kapitel 3, Seite 49 bis 74; Springer Science+Business Media, LLC 2009.

Als weitere Bestandteile kann das negative Aktivmaterial insbesondere Bindemittel umfassen. Eine Übersicht über geeignete Bindemittel geben H. Yamamoto und H. Mori in "Lithium-Ion Batteries - Science and Technologies", M. Yoshio, R. J. Brodd, A. Kozawa (Herausgeber), Kapitel 7, Seite 163 bis 180; Springer Science+Business Media, LLC 2009. Beispiele für Bindemittel umfassen mindestens eine Verbindung, ausgewählt aus Polyvinylalkohol, Carboxylmethylcellulose, Hydroxymethylcellulose, Polyvinylchlorid, carboxyliertes Polyvinylchlorid, Polyvinylfluorid, Ethylenoxid-haltige Polymere, Polyvinylpyrrolidon, Polyurethan, Polytetrafluorethen, Polyvinylidenfluorid, Polyethylen, Polypropylen, Ethylen-Propylen-Dien-Terpolymer, Styrol-Butadien-Copolymere, Acrylnitril-Butadien-Styrol-Copolymere, Epoxidharze, Polyamide und ähnliches. Als Bindemittel sind besonders Styrol-Butadien-Copolymer (SBR), Polyvinylidenfluorid (PVdF), Polytetrafluorethen (PTFE) und Ethylen-Propylen-Dien-Terpolymer (EPDM) als bevorzugt hervorzuheben. Die Menge an Bindemittel kann bis zu 15 Gew.-% des Aktivmaterials ausmachen, bevorzugt 1 bis 10 Gew.-%.

Die negative Elektrode kann durch ein Verfahren hergestellt werden, in dem das negative Aktivmaterial mit dem elektrisch leitenden Zusatz und dem Bindemittel sowie gegebenenfalls eines Lösungsmittels (z.B. N-Methylpyrrolidon) zu einer Aktivmaterialzusammensetzung vermischt und dann auf den Stromabnehmer aufgebracht werden. Solche Verfahren sind dem Fachmann bekannt und werden daher hier nicht näher beschrieben. Die Flächenbelegung des Stromabnehmers mit dem Aktivmaterial beträgt 1 bis 50 mg/cm², insbesondere 5 bis 20 mg/cm².

### Separator

Der Separator dient der Aufgabe, die Elektroden von einem direkten Kontakt miteinander zu schützen und so einen Kurzschluss zu unterbinden. Gleichzeitig muss der Separator den Transfer der Ionen von einer Elektrode zur anderen gewährleisten. Es ist daher wichtig, dass der Separator elektrisch nicht leitfähig ist, jedoch eine möglichst hohe lonenleitfähigkeit, insbesondere gegenüber Lithium-Ionen aufweist.

Geeignete Materialein sind dem Fachmann bekannt. Eine Übersicht geben Z. Zhan und P. Ramadass in "Lithium-Ion Batteries - Science and Technologies", M. Yoshio, R. J. Brodd, A. Kozawa (Herausgeber), Kapitel 20, Seite 367 bis 412; Springer Science+Business Media, LLC 2009.

Geeignete Materialien zeichnen sich insbesondere dadurch aus, dass sie aus einem isolierenden Material mit einer porösen Struktur gebildet sind. Geeignete Materialien sind insbesondere Polymere, wie Polyolefine, Polyester und fluorierte Polymere. Besonders bevorzugte Polymere sind Polyethylen (PE), Polypropylen (PP), Polyethylenterephthalat (PET), Polytetrafluorethen (PTFE) und Polyvinylidenfluorid (PVdF). In einer Ausführungsform hat das verwendete Polymer oder die verwendeten Polymere eine Schmelztemperatur im Bereich von 100°C bis 200°C und ermöglicht so ein Verschließen der Poren des Separators, sollte die Temperatur der Batterie zu stark ansteigen (sog. "Separator-Shut-Down"). Ferner kann der Separator keramische Materialen umfassen oder aus diesen bestehen, sofern ein weitgehender Lithium-Ionen-Transfer gewährleistet ist. Als Materialien sind insbesondere Keramiken, welche MgO, CuO oder Al₂O₃ umfassen, zu nennen. Der Separator kann aus einer Schicht aus einem oder mehreren der zuvor genannten Materialien bestehen oder auch aus mehreren Schichten, in denen jeweils eines oder mehrere der genannten Materialein miteinander kombiniert sind.

Die Dicke des Separators beträgt bevorzugt weniger als 50 µm, insbesondere weniger als 25 µm. Die Porengröße ist bevorzugt kleiner als 2 µm, insbesondere kleiner als 1 µm und größer als 0,001 µm. Ein besonders bevorzugter Porengrößenbereich liegt zwischen 0,01 und 0,7 µm. In einer bevorzugten Ausführungsform hat der Separator eine Porosität von mindestens 20 % und höchstens 60 %. Der elektrische Widerstand beträgt bevorzug mindestens 1 Ω cm², insbesondere mindestens 2 Ω cm².

### Elektrolytzusammensetzung

Als Elektrolytzusammensetzung ist prinzipiell jede Zusammensetzung geeignet, welche einen Transport der positiven Ladung von der einen Elektrode zur anderen Elektrode ermöglichen. Üblicherweise erfolgt dieser Transport in Form eines Lithium-Ionen-Transports. Bevorzugt sind somit Elektrolyte, die einen möglichst ungehinderten Transport der Lithium-Ionen ermöglichen.

Geeignete Elektrolytzusammensetzungen umfassen bevorzugt mindestens ein wasserfreies aprotisches Lösungsmittel und mindestens ein Salz. Geeignete Lösungsmittel sind dem Fachmann bekannt. Bevorzugt wird ein Gemisch aus mindestens einem zyklischen Carbonat und mindestens einem linearen Carbonat als Lösungsmittel verwendet. Als Beispiele für cyclische Carbonate sind Ethylencarbonat (EC), Propylencarbonat (PC) und Butylencarbonat (BC) zu nennen. Bevorzugte lineare Carbonate sind Dimethylencarbonat (DMC), Diethylcarbonat (DEC) und Methylethylcarbonat (MEC). Besonders bevorzugt ist ein Lösungsmittelgemisch, umfassend Propylencarbonat und Dimethylcarbonat. Das Lösungsmittelgemisch umfasst bevorzugt 10 bis 70 Gew.-%, stärker bevorzugt 20 bis 50 Gew.-% an einem oder mehreren cyclischen Carbonaten und 30 bis 90 Gew.-%, stärker bevorzugt 50 bis 80 Gew.-% an einem oder mehreren linearen Carbonaten, bezogen auf das Gesamtgewicht des Lösungsmittelgemisches.

Geeignete Salze sind alle Lithiumsalze, die den Transfer von Lithium-Ionen zwischen den Elektroden unterstützen. Beispiele umfassen bevorzugt sind Lithiumhexafluorophosphat (LiPF₆), Lithiumtetrafluoroborat (LiBF₄), LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (wobei x und y unabhängig voneinander ganze Zahlen von 1 bis 20 darstellen), LiCl, Lil, Lithiumbis(oxalato)borat (Li[B(C₂O₄)₂], LiBOB) und/oder Lithiumdifluoro(oxalato)borat (Li[BF₂(C₂O₄)], LiDFOB). Dies können einzeln oder in Kombination miteinander verwendet werden. Das Salz bzw. die Salze werden in der Elektrolytzusammensetzung bevorzugt in einer Konzentration von 0,1 bis 2,0 M verwendet. Vorzugsweise weist die Elektrolytzusammensetzung eine Lithium-Ionenleitfähgkeit λ_{Li} in einem Bereich 0 ≤ λ_{Li} ≤ 20 mS/cm auf.

Die erfindungsgemäße Elektrolytzusammensetzung umfasst bevorzugt Elektrolyt-Additive, welche auf der Oberfläche der positiven Elektrode und/oder der Oberfläche der negativen Elektrode unter Anlegung einer Spannung an den Elektroden eine Schicht aus elektrochemischen Reaktionsprodukten wie oligomere und/oder polymeren Einheiten aufbauen. Diese bilde so zusammen mit den elektrochemischen Reaktionsprodukten der übrigen Bestandteile der Elektrolytzusammensetzung eine erfindungsgemäße Beschichtungsschicht.

Ohne an die Theorie gebunden zu sein, wird angenommen, dass Carbonate wie beispielsweise Propylencarbonat, Ethylencarbonat und Diethylcarbonat aus der Elektrolytzusammensetzung auf der Elektrodenoberfläche reduziert werden und entsprechende Alkylcarbonate bilden (vgl. Kang Xu, Chem. Rev. 2004, 104, 4303-4417). Ebenso findet eine Reduktion der Elektrolyt-Additive statt. Dies wurde für verschiedene Elektrolyt-Additive untersucht und unter anderem wurde die Reduktion von γ-Butyrolacton unter Bildung polymerer Strukturen (vgl. Kang Xu, Chem. Rev. 2004, 104, 4303-4417) sowie die Reduktion von schwefelhaltigen Elektrolyt-Additiven wie Sultonen und deren Reaktion zu Alkylsulfonaten beobachtet (vgl. K. Xu, Chem. Rev. 2014, 114, 11503-11618; B. Li et al.; Electrochimica Acta 2013, 105, 1-6).

Die so gebildete Beschichtungsschicht ist dadurch gekennzeichnet, dass sie einen hohen elektrischen Widerstand aufweist und gleichzeitig eine hohe Ionenleitfähigkeit insbesondere gegenüber Lithium-Ionen besitzt.

Die Höhe des elektrischen Widerstandes der Beschichtungsschicht, der zum sicheren Betrieb der Lithium-Ionen-Batterie benötigt wird, ist abhängig vom Sicherheitsverhalten der Lithium-Ionen-Batterie im Schadensfall sowie während der Schnellentladung. Der elektrische Widerstand der Beschichtungsschicht ist größer 0 Ω cm² und weist vorzugsweise einen Wert von ≥ 1 Ω cm², bevorzugt ≥ 2 Ω cm², insbesondere ≥ 3 Ω cm² auf. Ein besonders bevorzugter Bereich umfasst einen elektrischen Widerstand von 10 bis 1000 Ω cm².

Die Lithium-Ionenleitfähigkeit σ_{Li} der Beschichtungsschicht ist größer 0 S/cm. Bevorzugt ist die Lithium-Ionenleitfähigkeit σ_{Li} der Beschichtungsschicht σ_{Li} ≥ 10⁻¹⁵ S/cm, besonders bevorzugt ist σ_{Li} ≥ 10⁻¹² S/cm und insbesondere ist σ_{Li} ≥ 10⁻¹⁰ S/cm.

Geeignete Elektrolyt-Additive sind nachfolgend aufgeführt.

### (1) Acyclische und cyclische Kohlensäureester der allgemeinen Formeln (Ia) oder (Ib):

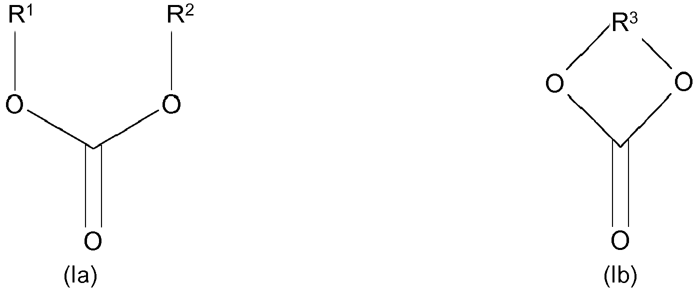

wobei R¹ und R² gleich oder verschieden sein können und für gesättigte oder ungesättigte, lineare oder verzweigte Kohlenwasserstoffketten mit 1 bis 12 Kohlenstoffatomen stehen. Bevorzugt sind R¹ und R² lineare Kohlenwasserstoffketten mit 1 bis 6 Kohlenstoffatomen. Vorzugsweise ist mindestens einer der Reste R¹ oder R² ungesättigt. Insbesondere steht R¹ oder R² für einen Methyl-, Ethyl-, Propyl-, Butyl-, Pentyl- oder Hexylrest und das jeweils andere für einen Vinyl-, Allyl- oder Propargylrest. R³ steht für einen gesättigten oder ungesättigten Kohlenwasserstoffrest mit einem bis vier Kohlenstoffatomen. R¹, R² und R³ können gegebenenfalls substituiert sein mit Halogenatomen, gesättigten oder ungesättigten, linearen oder verzweigten Kohlenwasserstoffresten mit 1 bis 6 Kohlenstoffatomen, welche mit Halogenatomen substituiert sein können, oder cyclischen, gesättigten oder ungesättigten Kohlenwasserstoffresten mit 3 bis 7 Kohlenstoffatomen, welche mit Halogenatomen substituiert sein können, wobei benachbarte Kohlenwasserstoffreste miteinander verbunden sein können, um so einen Ring zu bilden. R³ ist bevorzugt ein gesättigter oder ungesättigter Kohlenwasserstoffrest mit 2 Kohlenstoffatomen, welcher mit mindestens einem ungesättigten Kohlenwasserstoffrest substituiert ist. Bevorzugte Halogenatome sind F, Cl, Br, I, insbesondere F und Cl.

Spezifische Beispiele für Verbindungen der Formel (Ia) sind Vinylmethylcarbonat (VMC), Vinylethylencarbonat (VEC), Vinylpropylcarbonat, Allylmethylcarbonat (AMC), Allylethylcarbonat (AEC), Allylpropylcarbonat, Propargylmethylcarbonat (PMC), Propargylethylcarbonat, Propargylpropylcarbonat sowie asymmetrische Dialkylcarbonate wie Methyl-n-propylcarbonat, Methyl-iso-propylcarbonat, Ethyl-n-propylcarbonat und Ethyl-iso-propylcarbonat.

Spezifische Beispiele für Verbindungen der Formel (Ib) sind Ethylencarbonat, Methylethylencarbonat, Dimethylethylencarbonat, Phenylethylencarbonat (PhEC), Vinylencarbonat (VC), Phenylvinylencarbonat (PhVC), Vinylethylencarbonat, Allylethylencarbonat, Propargylethylencarbonat und Brenzcatechincarbonat.

Spezifische Beispiele für Halogenderivate der beschriebenen cyclischen und acyclischen Kohlensäureester sind Chlorethylencarbonat (CIEV), Fluorethylencarbonat (FEC), Trifluorpropylencarbonat (TFPC), Trifluormethylpropylencarbonat.
(2) Polycyclische aromatische Kohlenwasserstoffe mit 9 bis 30 Kohlenstoffatomen wie Biphenyl (BP), o-Terphenyl (OTP), m-Terphenyl, p-Terphenyl, Dibenzyl (DBZ), Inden, Fluoren, Naphthalin, Anthracen, Benzopyren, Acenaphthylen, Acenaphthen, Phenanthren, Fluoranthen, Pyren, Benzanthracen, Coronen, Tetracen, Pentacen und Chrysen. Besonders bevorzugt sind polycyclische aromatische Kohlenwasserstoffe mit 12 bis 24 Kohlenstoffatomen, insbesondere Biphenyl (BP), o-Terphenyl (OTP) und Dibenzyl (DBZ). Die Gruppe der polycyclischen aromatischen Kohlenwasserstoffe umfasst auch Verbindungen, in denen die aromatischen Ringe durch Heteroatome wie Sauerstoff oder Stickstoff voneinander getrennt sind, beispielsweise Diphenylether (DPE).

Aus dieser Gruppe sind Biphenyl (BP), o-Terphenyl (OTP), Dibenzyl (DBZ) und Diphenylether (DPE) als bevorzugt zu nennen. Ganz besonders ist Biphenyl (BP) bevorzugt.

### (3) Heterocyclische aromatische Verbindungen der Formel (II):

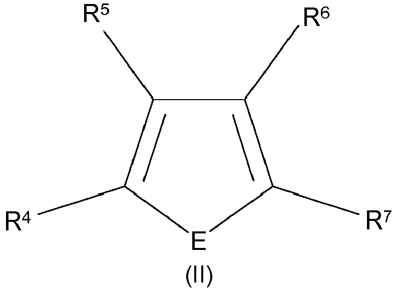

wobei E für ein Element, ausgewählt aus der Gruppe bestehend aus O, S und NR⁸, steht, R⁴ bis R⁷ jeweils für ein Wasserstoffatom, ein Halogenatom, eine Cyanogruppe, einen gesättigten oder ungesättigten Kohlenwasserstoffrest mit 1 bis 6 Kohlenstoffatomen, die mit Halogenatomen subsituiert sein können oder einen gesättigten oder ungesättigten Alkoxyrest mit 1 bis 6 Kohlenstoffatomen, die mit Halogenatomen substituiert sein können, steht, wobei benachbarte Reste R⁴ und R⁵, R⁵ und R⁶, R⁶ und R⁷ miteinander verbunden sein können, um so einen Ring zu bilden. R⁸ steht für ein Wasserstoffatom oder einen gesättigten oder ungesättigten, linearen oder verzweigten Kohlenwasserstoffrest mit 1 bis 6 Kohlenstoffatomen, die mit Halogenatomen subsituiert sein können. Bevorzugte Halogenatome sind F, Cl, Br, I, insbesondere F und Cl. Bevorzugt sind die Reste R⁴ bis R⁷ ausgewählt aus einem Wasserstoffatom, einer Cyanogruppe, einem Chloratom, einem Fluoratom, einem gesättigten Kohlenwasserstoffrest mit 1 bis 3 Kohlenstoffatomen oder einem gesättigten Alkoxyrest mit 1 bis 3 Kohlenstoffatomen.

Beispiele für Verbindungen der Formel (II) sind Furan, 2-Cyanofuran, Thiophen, N-Alkylpyrrol, insbesondere N-Methylpyrrol und N-Ethylpyrrol. Bevorzugte bicyclische Verbindungen der Formel (II) umfassen 3,4-Ethylenedioxythiophen (EDT).

### (4) Pyridin und Pyridinderivate der Formel (III):

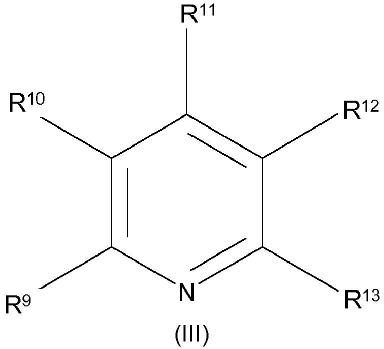

wobei R⁹ bis R¹³ unabhängig voneinander ausgewählt sein können aus einem Wasserstoffatom, einem Halogenatom, gesättigten oder ungesättigten, linearen oder verzweigten Kohlenwasserstoffresten mit 1 bis 6 Kohlenstoffatomen, und cyclischen, gesättigten oder ungesättigten Kohlenwasserstoffresten mit 3 bis 12 Kohlenstoffatomen, wobei benachbarte Kohlenwasserstoffreste miteinander verbunden sein können, um so einen Ring zu bilden. Bevorzug sind die Reste R⁹ bis R¹³ ausgewählt aus einem Wasserstoffatom, einem ungesättigten, unverzweigten Kohlenwasserstoffrest mit 2 bis 4 Kohlenstoffatomen oder einem cyclischen, ungesättigten Kohlenwasserstoffrest mit 6 bis 9 Kohlenstoffatomen. Bevorzugte Halogenatome sind F, Cl, Br, I, insbesondere F und Cl.

Konkrete Beispiele für Verbindungen der Formel (III) sind Pyridin, 2-Vinylpyridin, und 2,2'-Bipyridin. Besonders bevorzugt ist 2-Vinylpyridin.

### (5) Acyclische und cyclische Sulfite der allgemeinen Formeln (IVa) und (IVb):

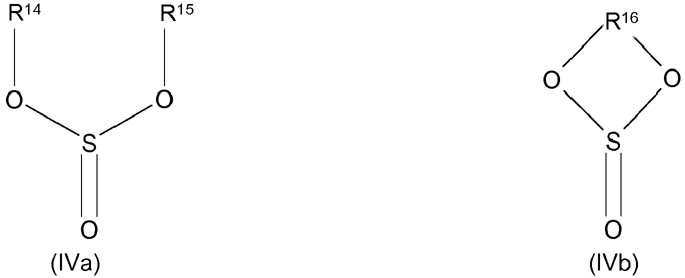

wobei R¹⁴ und R¹⁵ gleich oder verschieden sein können und für gesättigte oder ungesättigte, lineare oder verzweigte Kohlenwasserstoffketten mit 1 bis 6 Kohlenstoffatomen stehen. Bevorzugt sind R¹⁴ und R¹⁵ lineare Kohlenwasserstoffketten. Vorzugsweise ist mindestens einer der Reste R¹⁴ und R¹⁵ ungesättigt. Insbesondere steht R¹⁴ oder R¹⁵ für einen Methyl-, Ethyl-, Propyl-, Butyl-, Pentyl- oder Hexylrest und das jeweils andere für einen Vinyl-, Allyl- oder Propargylrest. R¹⁶ steht für einen gesättigten oder ungesättigten Kohlenwasserstoffrest mit einem bis vier Kohlenstoffatomen. R¹⁴, R¹⁵ und R¹⁶ können gegebenenfalls substituiert sein mit Halogenatomen, gesättigten oder ungesättigten, linearen oder verzweigten Kohlenwasserstoffresten mit 1 bis 6 Kohlenstoffatomen, welche mit Halogenatomen substituiert sein können, oder cyclischen, gesättigten oder ungesättigten Kohlenwasserstoffresten mit 3 bis 7 Kohlenstoffatomen, welche mit Halogenatomen substituiert sein können, wobei benachbarte Kohlenwasserstoffreste miteinander verbunden sein können, um so einen Ring zu bilden. R¹⁶ ist bevorzugt ein gesättigter oder ungesättigter Kohlenwasserstoffrest mit 2 oder 3 Kohlenstoffatomen. Bevorzugte Halogenatome sind F, Cl, Br, I, insbesondere F und Cl.

Spezifische Beispiele für Verbindungen der Formel (IIIa) sind Dimethylsulfit, Diethylsulfit, Dipropylsulfit, Dibutylsulfit, Dipentylsulfit und Dihexylsulfit. Besonders bevorzugt sind Dimethylsulfit und Diethylsulfit.

Spezifische Beispiele für Verbindungen der Formel (IIIb) sind Ethylensulfit, Propylensulfit, Butylensulfit, Vinylethylensulfit, Phenylethylensulfit, Phenylvinylensulfit. Besonders bevorzugt sind Ethylensulfit und Propylensulfit.

### (6) Sulfonsäureester der allgemeinen Formel (V):

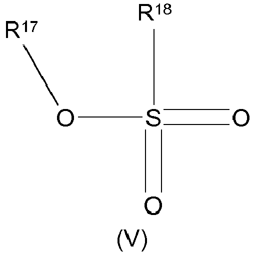

wobei R¹⁷ und R¹⁸ unabhängig voneinander lineare oder verzweigte, gesättigte oder ungesättigte Kohlenwasserstoffketten mit 1 bis 6 Kohlenstoffatomen darstellen, welche gegebenenfalls mit Halogenatomen oder Halogenalkanen mit 1 bis 5 Kohlenstoffatomen substituiert sein können. Bevorzugte Halogenatome sind F, Cl, Br, I, insbesondere F und Cl. Bevorzugte Halogenalkane sind -CF₃ und -CCl₃. In einer bevorzugten Ausführungsform sind R¹⁷ und R¹⁸ miteinander verbunden und bilden so einen Ring. Insbesondere sind Verbindungen der Formel (V) bevorzugt, in denen die Reste R¹⁷ und R¹⁸ verbunden sind und einen Ring, bestehen aus drei Kohlenstoffatomen sowie den daran gebundenen O- und S-Atom, bilden. Besonders bevorzugte Ausführungsformen sind Sultone, insbesondere 1,3-Propansulton, 1,3-Propensulton, 1,4-Butansulton, 1,4-Butensulton sowie deren Halogenderivate, insbesondere Fluorpropansultone.

### (7) Schwefelsäureester der allgemeinen Formel (VI):

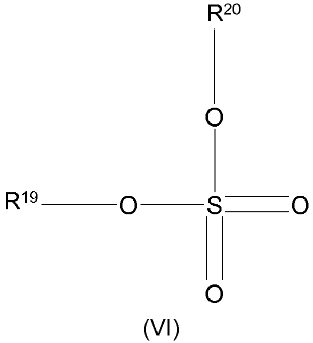

wobei R¹⁹ und R²⁰ unabhängig voneinander lineare oder verzweigte, gesättigte oder ungesättigte Kohlenwasserstoffketten mit 1 bis 6 Kohlenstoffatomen darstellen, welche gegebenenfalls mit Halogenatomen substituiert sein können. In einer bevorzugten Ausführungsform sind R¹⁹ und R²⁰ miteinander verbunden und bilden so einen Ring. Bevorzugte Halogenatome sind F, Cl, Br, I, insbesondere F und Cl.

Besonders bevorzugte Verbindungen der Formel (VI) sind Allylmethylsulfonat (AMS), Allylethylsulfonat, Propargylmethylsulfonat (PMS), Propargylethylsulfonat und 1,3,2-Dioxathiolan-2,2-dioxid (DTD).

### (8) Cyclische Carbonsäurederivate der Formel (VII):

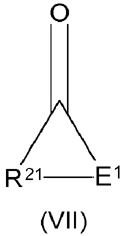

wobei E¹ für O oder NR²⁴ steht, R²¹ für eine Kohlenwasserstoffrest mit 1 bis 5 Kohlenstoffatomen oder eine Gruppe der Formel -R²²-C(O)-E²-R²³- steht, wobei R²² und R²³ je unabhängig voneinander für einen Kohlenwasserstoffgruppe mit 1 bis 2 Kohlenstoffatomen stehen, E² für O oder NR²⁴ steht und R²⁴ je unabhängig voneinander für ein Wasserstoffatom, einen linearen oder verzweigten, gesättigten oder ungesättigten Kohlenwasserstoffrest mit 1 bis 6 Kohlenstoffatomen steht, welche gegebenenfalls substituiert sein können mit Halogenatomen, Kohlenwasserstoffresten mit 1 bis 6 Kohlenstoffatomen oder Resten der Formel -C(O)R²⁵, steht, wobei R²⁵ für einen linearen oder verzweigten, gesättigten oder ungesättigten Kohlenwasserstoffrest mit 1 bis 6 Kohlenstoffatomen steht. Bevorzugte Halogenatome sind F, Cl, Br, I, insbesondere F und Br.

Konkrete Beispiele für Verbindungen der Formel (VII) mit E¹ = O sind Lactone, wie alpha-, beta-, gamma-, delta- und epsilon-Lactone, sowie deren Halogenderivate. Bevorzugt ist hiervon gamma-Lacton, insbesondere gamma-Butyrolacton sowie Derivate davon, insbesondere Halogenderivate wie α-Fluor-γ-butyrolacton, α-Brom-γ-butyrolacton, β-Brom-γ-butyrolacton, β-Fluor-γ-butyrolacton, γ-Brom-γ-butyrolacton, γ-Fluor-γ-butyrolacton.

Beispiele für Verbindungen der Formel (VII) mit E¹ = NR²⁴ sind Lactame wie alpha-, beta-, gamma-, delta- und epsilon-Lactam, sowie deren Halogenderivate, N-Alkyl-Lactame, N-Acetyl-Lactame. Eine besonders bevorzugte Ausführungsform ist N-Acetylcaprolactam.

Konkrete Beispiele für Verbindungen der Formel (VII) mit E¹ = O und R²¹ = -R²²-C(O)-E²-R²³- umfassen Glycolid und dessen mit Kohlenwasserstoffresten mit 1 bis 6 Kohlenstoffatomen substituierten Derivate, insbesondere Glycolid (Dimer der Hydroxyessigsäure), Dimethylglycolid und Tetramethylglycolid.

### (9) Acyclische ungesättigte Carbonsäurederivate der allgemeinen Formel (VIII)

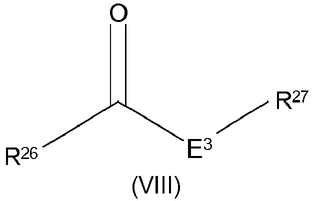

wobei R²⁶ für Wasserstoff, ein Halogenatom oder einen gesättigten oder ungesättigten, aromatischen oder aliphatischen, linearen oder verzweigten Kohlenwasserstoffrest mit 1 bis 12 Kohlenstoffatomen, welche mit Halogenatomen substituiert sein können, und R²⁷ für einen gesättigten oder ungesättigten, lineare oder verzweigten Kohlenwasserstoffrest mit 1 bis 12 Kohlenstoffatomen steht und E³ für O oder NR²⁸ steht und R²⁸ und R²¹ unabhängig voneinander dieselbe Bedeutung haben. Bevorzugte Halogenatome sind F, Cl, Br, I, insbesondere F und Cl. Stellt R²⁶ einen aromatischen Rest dar, so ist R²¹ bevorzugt ein gesättigter, linearer oder verzweigter Kohlenwasserstoffrest mit 1 bis 6 Kohlenstoffatomen. Stellt R²⁶ einen aliphatischen Kohlenwasserstoffrest dar, so steht R²¹ bevorzugt für einen Vinyl-, Allyl- oder Propargylrest. Besonders bevorzugt sind die Verbindung der Formel (VII) Carbonsäureester, insbesondere Vinylacetat (VA), Chlorameisensäuremethylester, Benzoesäuremethylester und Zimtsäuremethylester, sowie Carbonsäureamide, insbesondere N,N-Dimethyltrifluoracetamid (DTA), N,N-Dimethylacetamid und N,N-Diethyltrifluoracetamid.

### (10) Carbonsäureanhydride und Carbonsäureimide der Formeln (IXa) und (IXb):

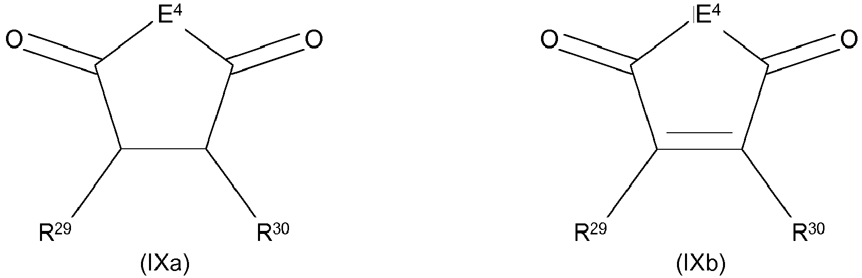

wobei E⁴ die Bedeutung O oder NR³¹ hat, R²⁹ und R³⁰ unabhängig voneinander ausgewählt sein könne aus Wasserstoffatomen, Halogenatomen und linearen oder verzweigten, gesättigten oder ungesättigten Kohlenwasserstoffresten mit 1 bis 6 Kohlenstoffatomen, welche gegebenenfalls mit Halogenatomen substituiert sein können. In einer bevorzugten Ausführungsform sind R²⁹ und R³⁰ miteinander verbunden und bilden so einen Ring. R³¹ stellt ein Wasserstoffatom oder einen linearen oder verzweigten, gesättigten oder ungesättigten Kohlenwasserstoffrest mit 1 bis 6 Kohlenstoffatomen dar. Bevorzugte Halogenatome sind F, Cl, Br, I, insbesondere F und Cl.

Konkrete Beispiele für Verbindungen der Formel (IXa) sind Bernsteinsäureanhydrid, Maleinsäureanhydrid, Bernsteinsäureimid und Maleinsäureimid. Konkrete Beispiele für Verbindungen der Formel (IXb) sind Phthalsäureanhydrid und Phthalsäureimid.

### (11) Verbindungen der Formel (X)

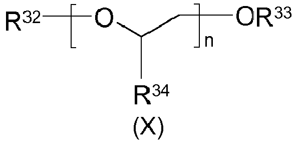

wobei n für eine ganze Zahl von 1 bis 10 steht, R³² und R³³ unabhängig voneinander für einen linearen oder verzweigten, gesättigten oder ungesättigten Kohlenwasserstoffrest mit 1 bis 6 Kohlenstoffatomen stehen und R³⁴ für eine Methylrest, einen Ethylrest, einen n-Propylrest oder einen iso-Propylrest steht. Besonders bevorzugt ist Tetra(ethylenglykol)dimethylether (TEGME).

### (12) Organische Nitrile der Formel (XI):

R³⁵-CN (XI)

wobei R³⁵ einen linearen, gesättigten oder ungesättigten Kohlenwasserstoffrest mit 1 bis 6 Kohlenstoffatomen, darstellt, der gegebenenfalls mit mindestens einer Cyanogruppe subsituiert sein kann. Bevorzugte Ausführungsformen sind Acetonitril (AN) und Adiponitril (ADN)

### (13) Organische Phosphate der Formel (XII):

(O)P(OR³⁶)(OR³⁷)(OR³⁸) (XII)

wobei R³⁶ bis R³⁸ unabhängig voneinander aliphatische oder aromatische Kohlenwasserstoffreste mit 1 bis 6 Kohlenstoffatomen darstellen, welche gegebenenfalls mit einem oder mehreren Halogenatomen substituiert sein können. Bevorzugte Halogenatome sind F, Cl, Br, I, insbesondere F und Cl. Eine bevorzugte Ausführungsform ist Tris(2,2,2-trifluorethyl)phosphat (TTFP).

### (14) Organische Borate der Formel (XIII):

Mt[B(OR³⁹)(OR⁴⁰)(OR⁴¹)(OR⁴²)] (XIII)

wobei Mt für ein einwertiges Metallkation, bevorzugt Lithium, steht, und R³⁹ bis R⁴² unabhängig voneinander aliphatische oder aromatische Kohlenwasserstoffreste mit 1 bis 6 Kohlenstoffatomen darstellen, welche gegebenenfalls mit einem oder mehreren Halogenatomen substituiert sein können, oder Carbonylgruppen mit 1 bis 6 Kohlenstoffatomen darstellen, welche gegebenenfalls mit einem oder mehreren Halogenatomen substituiert sein können. Bevorzugte Halogenatome sind F, Cl, Br, I, insbesondere F und Cl. Bevorzugt sind je zwei der Reste R³⁹ bis R⁴² miteinander verbunden und bilden so einen Ring. Bevorzugte Ausführungsformen sind Lithiumbis(oxalato)borat (LiBOB) und Lithiumdifluoro(oxalato)borat (LiDFOB).

### (15) Organische Dialkyldicarbonate der Formel (XIV):

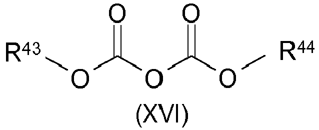

wobei R⁴³ und R⁴⁴ unabhängig voneinander ausgewählt sein können aus linearen oder cyclischen, gesättigten oder ungesättigten Kohlenwasserstoffresten mit 1 bis 6 Kohlenstoffatomen.

### (16) Anorganische Verbindungen der Formeln CO₂, N₂O, SO₂, CS₂ und Sₓ²⁻ (insbesondere S₈²⁻).

Alle zuvor genannten Elektrolyt-Additive können einzeln oder in Kombination miteinander verwendet werden.

Von den zuvor genannten Elektrolyt-Additiven sind insbesondere Sultone, Lactone und polycyclische aromatische Kohlenwasserstoffe bevorzugt. Sultone bilden dabei insbesondere auf der negativen Elektrode eine erfindungsgemäße Beschichtungsschicht, während Lactone und polycyclische aromatische Kohlenwasserstoffe eine solche Schicht auf der positiven Elektrode bilden.

### Schnellentladungsvorrichtung

Zusätzlich umfasst die erfindungsgemäße Lithium-Ionen-Batterie eine Schnellentladungsvorrichtung (sog. "Fast Discharge Device"). Diese ermöglicht es im Schadensfall, z.B. bei Beschädigung einer Batteriezelle, die Spannung in der Zelle bzw. der Batterie innerhalb kurzer Zeit zu minimieren und die lokale Erwärmung während eines Kurzschlusses so gering wie möglich zu halten. Die Schnellentladungsvorrichtung zeichnet sich dadurch aus, dass sie ein elektrisches Bauteil mit einem elektrischen Widerstand von 0,1 bis 200 µΩ, vorzugsweise von 50 bis 150 µΩ umfasst. Die Schnellentladungsvorrichtung ist so angeordnet, dass sie die negative und die positive Elektrode einer Batteriezelle miteinander verbinden kann, vorzugsweise an den Terminalen der Elektroden.

### Beschichtungsschicht

Die erfindungsgemäße Lithium-Ionen-Batterie zeichnet sich dadurch aus, dass die negative und/oder die positive Elektrode mit einem Material beschichtet ist, welches zu einer Erhöhung des elektrischen Kontaktwiderstandes der Elektroden führt und dennoch eine gute Ionenleitfähigkeit aufweist. Durch eine solche Schicht ist es möglich auch im Fall der mechanischen Beschädigung des Separators die Gefahr eines Kurzschlusses zu reduzieren.

Die Beschichtungsschicht hat bevorzugt eine Dicke von ≤ 50 µm, insbesondere von ≤ 25 µm. Der elektrische Widerstand der Beschichtungsschicht ist größer 0 Ω cm² und weist vorzugsweise einen Wert von ≥ 1 Ω cm², bevorzugt ≥ 2 Ω cm², insbesondere ≥ 3 Ω cm² auf. Die Ionenleitfähigkeit des Elektrolyten und/oder der Oberflächenbeschichtungsschicht ist im Allgemeinen abhängig vom Sicherheitsverhalten der Lithium-Ionen-Batterie während der Schnellentladung bzw. des Schadenfalls. Die Lithium-Ionenleitfähigkeit σ_{Li} der Beschichtungsschicht ist größer 0 S/cm. Bevorzugt ist die Lithium-Ionenleitfähigkeit σ_{Li} der Beschichtungsschicht σ_{Li} ≥ 10⁻¹⁵ S/cm, besonders bevorzugt ist σ_{Li} ≥ 10⁻¹² S/cm und insbesondere ist σ_{Li} ≥ 10⁻¹⁰ S/cm.

Die Beschichtungsschicht besteht aus einem Material, welches in der verwendeten Elektrolytzusammensetzung unter den Betriebsbedingungen der Lithium-Ionen-Batterie eine Löslichkeit von weniger als 1 g/L, bevorzugt von weniger als 0,5 g/L, insbesondere von weniger als 0,1 g/L aufweist. Betriebsbedingungen der Lithium-Ionen-Batterie umfassen eine Temperatur von -50°C bis 100°C, bevorzug -20°C bis 70°C.

In einer Ausführungsform der Erfindung wird die Beschichtung in der Art erhalten, dass die Elektroden auf der Oberfläche des positiven und/oder negativen Aktivmaterials vor der Montage der Lithium-Ionen-Batterien mit dem geeigneten Material beschichtet werden.

Geeignete Materialien sind sowohl organische, als auch anorganische Beschichtungsmaterialien, sofern sie die genannten Bedingungen hinsichtlich der Löslichkeit, der elektrischen Leitfähigkeit und der Lithium-Ionenleitfähigkeit erfüllen. Als organische Beschichtungen sind insbesondere Polymere wie Polyolefine und Polyester zu nennen. Insbesondere bevorzugt sind Beschichtungen umfassend Polyethylen, Polypropylen, Polyethylenterephthalat, Polyvinylfluoriden und Polytetrafluorethen. Geeignete anorganische Beschichtungsmaterialien sind nicht besonders eingeschränkt, sofern sie die genannten Bedingungen hinsichtlich der Löslichkeit, der elektrischen Leitfähigkeit und der Lithium-Ionenleitfähigkeit erfüllen. Als Beispiele sind insbesondere anorganische Keramiken, nicht-elektronisch leitende Metalloxide und Metallphosphate sowie Lithiumsalze zu nennen. Insbesondere geeignet sind Beschichtungen, umfassend AlPO₄, Al₂O₃, ZrO₂, SiO₂, LiF, Li₂O, Li₂CO₃ und AlF₃, sowie Gemische davon, zu nennen.

Die Materialien können mit allen dem Fachmann bekannten Beschichtungsverfahren auf die Oberfläche der Aktivmaterialien aufgebracht werden. Zu nennen ist Tauchbeschichten, Walzenbeschichten, Stabbeschichten, Bürstenbeschichten, Sprühbeschichten, Rakelbeschichten, Fließbeschichten, Rotationsbeschichten oder Schlitzbeschichten. Besonders geeignet ist das Sprühbeschichten, insbesondere von Lösungen der Materialien oder Suspensionen, besonders von Nanoteilchen ungelösten Materials. Ferner ist besonders für polymere Materialein das Rotationsbeschichten (Spin-Coating) bevorzugt.

In einer weiteren Ausführungsform der vorliegenden Erfindung wird die Beschichtungsschicht aus elektrochemischen Reaktionsprodukten der zuvor genannten Elektrolyt-Additive (1) bis (16) gebildet. Diese können einzeln oder in Kombination miteinander mit der Oberfläche des positiven und/oder negativen Aktivmaterials zur Reaktion gebracht werden. Die Reaktion kann vor oder nach der Montage der Lithium-Ionen-Batterie durchgeführt werden. Wird die Reaktion vor der Montage, d.h. vor dem Zusammenfügen der Bestandteile der Lithium-Ionen-Batterie, durchgeführt, so wird die jeweilige Elektrode in eine Lösung eingetaucht, welche den oder die gewünschten Elektrolyt-Additive umfasst, und eine Spannung wird angelegt. Nach Beendigung der Reaktion wird die beschichtete Elektrode gegebenenfalls gereinigt, getrocknet und/oder gesintert und kann so in die Lithium-Ionen-Batterie eingebaut werden. Die Reinigung kann durch Spülen mit einem aprotischen Lösungsmittel, insbesondere dem zu verwendenden Elektrolytlösungsmittel, erfolgen. Der Trocknungsschritt kann bei einer Temperatur von 70°C bis 150°C erfolgen. Das Sintern kann bei einer Temperatur von 150°C bis 500°C, insbesondere bei 175°C bis 300°C erfolgen. Bevorzugt umfasst die Tauchlösung dasselbe/dieselben Lösungsmittel wie die Elektrolytzusammensetzung, die später in der Lithium-Ionen-Batterie zum Einsatz kommt. In diesem Fall ist das Waschen, Trocknen und/oder Sintern in der Regel nicht notwendig.

In einer bevorzugten Ausführungsform wird die elektrochemische Beschichtungsreaktion in der bereits montierten Lithium-Ionen-Batterie durchgeführt. Dazu werden die Bestandteile der Batteriezelle in an sich bekannter Weise montiert, wobei die Schnellentladungsvorrichtung derart angeordnet ist, dass sie die negative(n) und die positive(n) Elektrode(n) der Lithium-Ionen-Batterie miteinander verbindet. Als Elektrolytzusammensetzung eine Zusammensetzung verwendet wird, die mindestens eines der Elektrolyt-Additive (1) bis (16) umfasst. Anschließend wird die Batteriezelle in der dem Fachmann bekannten Art zur ersten Verwendung aufgeladen, 1 bis 10 Stunden im aufgeladenen Zustand gehalten. Die Batterie kann anschließend entladen und der Ladezyklus gegebenenfalls 1- bis 5-mal wiederholt werden. Durch dieses Verfahren wird eine sogenannte "Solid Electrolyte Interface" (SEI) auf den Oberflächen der Elektroden gebildet, welche elektrochemische Reaktionsprodukte der Elektrolyt-Additive (1) bis (16) sowie ggf. elektrochemische Reaktionsprodukte der weiteren Bestandteile der Elektrolytzusammensetzung umfasst. Durch die Zugabe der Elektrolyt-Additive wird so eine SEI erhalten, welche den gewünschten Eigenschaften entspricht, nämlich (i) einen hohen elektrischen Widerstand aufweist und (ii) eine gute Ionenleitfähigkeit gegenüber Lithium-Ionen besitzt. Dieses Verfahren entspricht der Formierung der Lithium-Ionen-Batterie. Hiermit bezeichnet der Fachmann das erstmalige Durchlaufen einer definierten Lade-Entlade-Sequenz einer Lithium-Ionen-Batterie. Die Formierung wird bevorzugt bei einer Temperatur von 0 bis 70°C durchgeführt, insbesondere bei 15 bis 50°C. Die Lithium-Ionen-Batterie wird typischerweise zunächst mit niedrigem Stromfluss beladen, welcher später erhöht wird. Die Zellspannung der geladenen Lithium-Ionen-Batterie wird gemessen und die Batterie wird über einen Zeitraum vorgegebenen gelagert. Die Messung der Zellspannung dient dem Auffinden fehlerhafter Batterien.

Besonders geeignete SEI für die negative Elektrode umfassen oligomere und/oder polymere Strukturen, die aus Sultonen, wie 1,3-Propansulton (PS), 1,3-Propensulton, 1,4 Butansulton, 1,4-Butensulton und Fluorpropansulton, gebildet sind. Besonders geeignete SEI für die positive Elektrode umfassen oligomere und/oder polymere Strukturen, die aus γ-Butyrolacton und/oder Biphenyl gebildet sind. Die Formierung kann dementsprechend für jede Elektrode getrennt in einer Elektrolytzusammensetzung, umfassend die gewünschten Elektrolyt-Additive, durchgeführt werden.

In einer bevorzugten Ausführungsform wird die Lithium-Ionen-Batterie vor der Formierung in der Art zusammengefügt, dass jede Batteriezelle aus einer positiven Elektrode, einer negativen Elektrode und einem dazwischen angeordneten Separator, wobei die Bestandteile gleichmäßig mit der Elektrolytzusammensetzung in Kontakt treten. Ferner kann jede Zelle eine Schnellentladungsvorrichtung ("Fast Discharge Device") umfassen. Sofern die erfindungsgemäße Lithium-Ionen-Batterie (d.h. Batterie-Pack, umfassend mindestens eine Batteriezelle und mindestens eine Schnellentladungsvorrichtung) jedoch aus einer Vielzahl einzelner Batteriezellen gebildet wird, ist es nicht erforderlich eine Schnellentladungsvorrichtung für jede der Batteriezellen vorzusehen. Bevorzugt umfasst eine erfindungsgemäße Lithium-Ionen-Batterie daher weniger Schnellentladungsvorrichtungen als Batteriezellen. In der Regel ist eine Schnellentladungsvorrichtung pro Lithium-Ionen-Batterie ausreichend, um die Batteriezellen der Batterie zu entladen.

Gegebenenfalls können die Verfahren zur Beschichtung der Elektrodenoberflächen miteinander kombiniert werden, d.h. die Elektroden können zunächst vor der Montage der Batteriezellen mit einer Beschichtungsschicht versehen werden, welche anschließend in der montierten Batteriezelle durch eine elektrochemische Reaktion unter Verwendung der Elektrolyt-Additive (1) bis (16) mit einer SEI ergänzt wird.

### Ausführungsformen der Erfindung

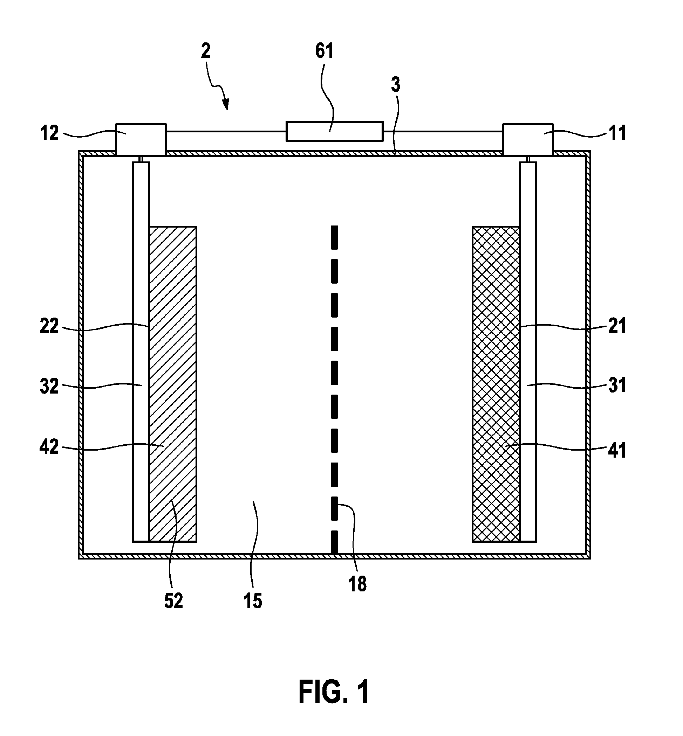

In Figur 1 ist eine Batteriezelle 2 schematisch dargestellt. Die Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Das Zellengehäuse 3 kann aber auch aus einem elektrisch isolierenden Material, beispielsweise Kunststoff, gefertigt sein.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden. Die Terminals 11, 12 sind beabstandet voneinander an einer Deckfläche des prismatischen Zellengehäuses 3 angeordnet.

Die Terminals 11, 12 sind über die Schnellentladungsvorrichtung 62 miteinander verbunden. Die Schnellentladungsvorrichtung 62 ist dadurch gekennzeichnet, dass diese einen geringen elektrischen Widerstand, beispielsweise von 100 µΩ aufweist.

Innerhalb des Zellengehäuses 3 der Batteriezelle 2 ist ein Elektrodenwickel angeordnet, welcher zwei Elektroden, nämlich eine negativen Elektrode 21 und eine positive Elektrode 22, aufweist. Die negative Elektrode 21 und die positive Elektrode 22 sind jeweils folienartig ausgeführt und unter Zwischenlage eines Separators 18 zu dem Elektrodenwickel gewickelt. Es ist auch denkbar, dass mehrere Elektrodenwickel in dem Zellengehäuse 3 vorgesehen sind. Anstelle des Elektrodenwickels kann auch beispielsweise ein Elektrodenstapel vorgesehen sein.

Die negative Elektrode 21 umfasst ein negatives Aktivmaterial 41, welches folienartig ausgeführt ist. Das negative Aktivmaterial 41 weist als Grundstoff Silizium oder eine Silizium enthaltende Legierung auf.

Die negative Elektrode 21 umfasst ferner einen Stromableiter 31, welcher ebenfalls folienartig ausgebildet ist. Das negative Aktivmaterial 41 und der Stromableiter 31 sind flächig aneinander gelegt und miteinander verbunden. Der Stromableiter 31 der negativen Elektrode 21 ist elektrisch leitfähig ausgeführt und aus einem Metall gefertigt, beispielsweise aus Kupfer. Der Stromableiter 31 der negativen Elektrode 21 ist elektrisch mit dem negativen Terminal 11 der Batteriezelle 2 verbunden.

Bei der positiven Elektrode 22 handelt es sich vorliegend um eine HE(Hochenergie)-NCM(Nickel-Kobalt-Mangan)-Elektrode. Die positive Elektrode 22 umfasst ein positives Aktivmaterial 42, welches in Partikelform vorliegt. Zwischen den Partikeln des positiven Aktivmaterials 42 sind Zusatzstoffe, insbesondere Leitruß und Binder, angeordnet. Das positive Aktivmaterial 42 und die besagten Zusatzstoffe bilden dabei einen Verbund, welcher folienartig ausgeführt ist.

Die positive Elektrode 22 umfasst ferner einen Stromableiter 32, welcher ebenfalls folienartig ausgebildet ist. Der Verbund aus dem positiven Aktivmaterial 42 und den Zusatzstoffen und der Stromableiter 32 sind flächig aneinander gelegt und miteinander verbunden. Der Stromableiter 32 der positiven Elektrode 22 ist elektrisch leitfähig ausgeführt und aus einem Metall gefertigt, beispielsweise aus Aluminium. Der Stromableiter 32 der positiven Elektrode 22 ist elektrisch mit dem positiven Terminal 12 der Batteriezelle 2 verbunden.

Die negative Elektrode 21 und die positive Elektrode 22 sind durch den Separator 18 voneinander getrennt. Der Separator 18 ist ebenfalls folienartig ausgebildet. Der Separator 18 ist elektronisch isolierend ausgebildet, aber ionisch leitfähig, also für Lithium-Ionen durchlässig.

Auf die Partikel des positiven Aktivmaterials 42 ist eine Beschichtung 52 aufgebracht. Die Partikel des positiven Aktivmaterials 42 sind von der Beschichtung 52 umgeben. Die Beschichtung 52 umhüllt somit die Partikel des positiven Aktivmaterials 42.

Die Beschichtung 52 enthält vorliegend eine Polymerschicht, die während der Formierung aus dem in der Elektrolytzusammensetzung enthaltenen monomeren 3-Propensulton (PRS) gebildet wurde. Die Beschichtung 52 verhindert oder reduziert einen Kontakt des positiven Aktivmaterials 42 mit der in dem Zellengehäuse 3 der Batteriezelle 2 enthaltenen Elektrolytzusammensetzung 15.

Das Zellengehäuse 3 der Batteriezelle 2 ist mit einer flüssigen aprotischen Elektrolytzusammensetzung 15 gefüllt. Die Elektrolytzusammensetzung 15 umgibt dabei die negativen Elektrode 21, die positive Elektrode 22 und den Separator 18. Auch die Elektrolytzusammensetzung 15 ist ionisch leitfähig. Die Elektrolytzusammensetzung umfasst gegebenenfalls mindestens eine der zuvor definierten Verbindungen (1) bis (16). Vorliegend umfasst sie beispielsweise 3-Propensulton in einer Konzentration von 2 Gew.-% bezogen auf die Gesamtelektrolytmenge.

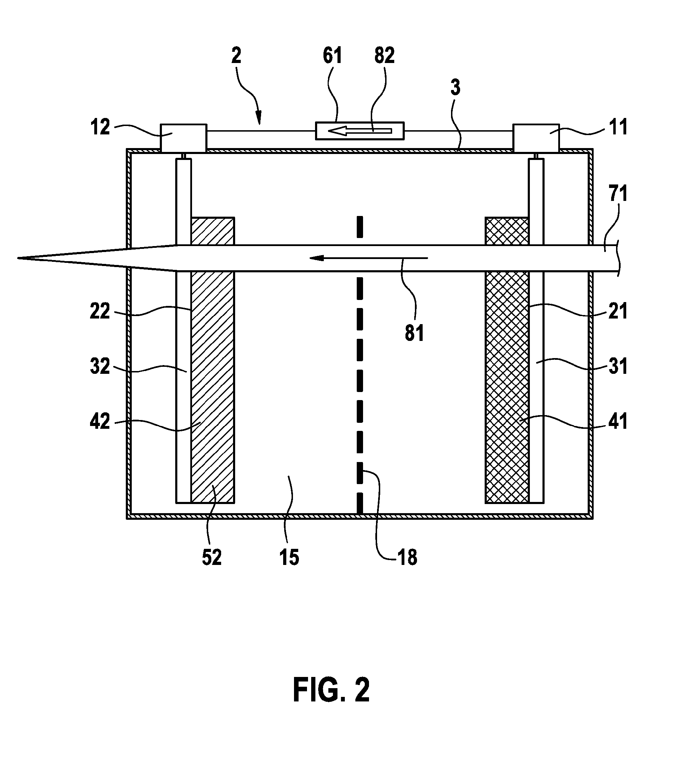

In Figur 2 zeigt schematisch die Batteriezelle 2 aus Figur 1 im Schadensfall einer sog. Nail Penetration, d.h. dem Durchdringen der Batteriezelle 2 mittels eines Nagels 71. Durch den Nagel 71, der auch den Separator 18 durchdringt, kann ein Schadstellenstrom 81 von der negativen Elektrode 21 zur positiven Elektrode 22 fließen. Hierdurch kann es zu einer starken lokalen Erwärmung im Bereich der Schadstelle kommen. Auch ein direkter Kontakt der negativen Elektrode 21 und positiven Elektrode 22 kann entstehen. Ist der elektrische Widerstand der ausgelösten Schnellentladungsvorrichtung 61 geringer als der der Schadstelle, so fließt ein Großteil des Stroms als Schnellentladungsstrom 82. Es kommt zu einer schnellen Entladung der Batteriezelle 2 und gleichzeitig zu einer globalen Erwärmung, welche das Verschließen des Separators auslöst. Im Schadensfall reduziert die Beschichtung 52 ferner den Kontakt der Elektroden 21, 22 untereinander und/oder mit dem Nagel 71. Damit wird das Fließen eines Schadstellenstroms 81 weiter reduziert oder gänzlich verhindert. Die Gefahr eines thermischen Durchgehens der Batteriezelle 2 wird verhindert oder reduziert.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Ausführungsbeispiel

Es werde zwei Lithium-Ionen-Batterien hergestellt, welche folgenden Kenndaten aufweisen:
Positive Elektrode:
   Aktivmaterial: LiNi_{0,8}Co_{0,15}Al_{0,05}O₂ (NCA)
   Bindemittel: ca. 3 Gew.-%, bezogen auf die Gesamtmenge des Aktivmaterials Elektrisch leitendes Material: Carbon Black, ca. 3% bezogen auf die Gesamtmenge des Aktivmaterials
   Flächenbelegung: ca. 20 mg/cm²
Negative Elektrode:
   Aktivmaterial: Graphit
   Bindemittel: ca. 3 Gew.-%, bezogen auf die Gesamtmenge des Aktivmaterials
   Flächenbelegung: ca. 15 mg/cm²
Separator:
   Dicke: ca. 20 µm mit keramischem Coating
Vorbehandlung und Formierung:
   Precharge auf ca. 10% State of Charge (SOC)
   Formierung:
      2 Zyklen (Laden und Entladung) mit 0,2 C, Spannungsgrenzen 2,5 - 4,35 V 1 Zyklus mit 1 C, Spannungsgrenzen 2,5 - 4,35 V

Eine dieser Zellen dient als Vergleichszelle. In dieser wurde als Elektrolytzusammensetzung eine 1,2 M Lösung von LiPF₆ in einem gemischten Lösungsmittel aus Ethylencarbonat (EC) : Dimethylcarbonat (DMC) : Ethylmethylcarbonat (EMC) im Verhältnis 25:20:55 verwendet.

In der anderen, erfindungsgemäßen Zelle wurde als Elektrolytzusammensetzung eine 1,2 M Lösung von LiPF₆ in einem gemischten Lösungsmittel aus Fluorethylencarbonat (FEC) : Dimethylcarbonat (DMC) im Verhältnis 90:10 verwendet, dem zusätzlich 2 Gew.-% 1,3-Propensulton (PRS), bezogen auf die Gesamtelektrolytmenge, zugemischt wurde verwendet. Beide Zellen wurden zusammengebaut und anschließend wie angegeben beladen.

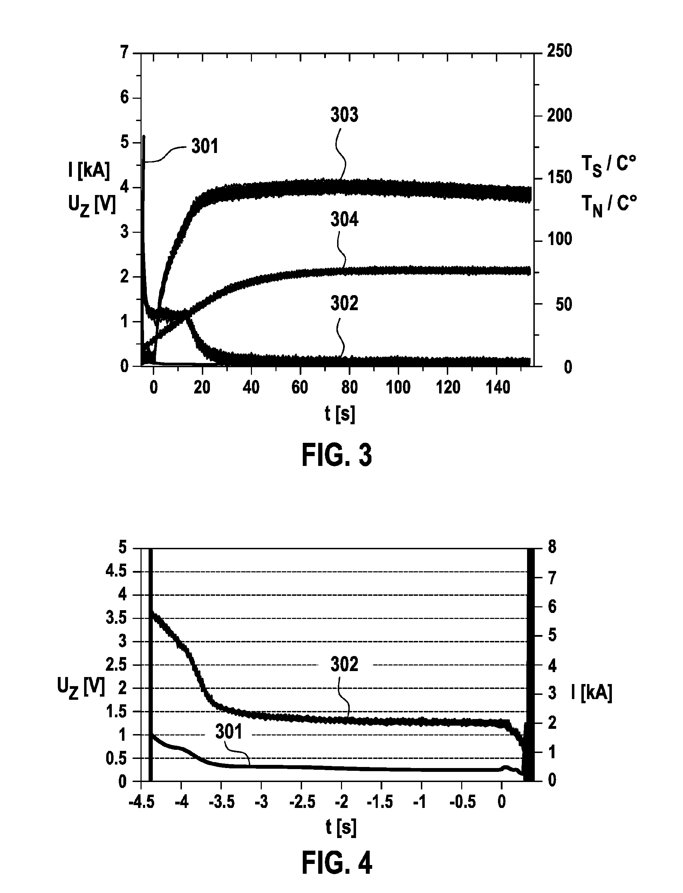

Mit beiden Zellen wurde ein Nail-Penetration-Test durchgeführt. Die Messergebnisse sind in Figur 3 (erfindungsgemäße Lithium-Ionen-Batterie) und Figur 4 (Vergleichsbatterie) zu sehen.

Figur 3 zeigt dabei die Änderung der Nageltemperatur 303 (T_{N} in °C) und der Oberflächentemperatur 304 (T_{S} in °C). Ferner ist die Änderung der Stromstärke 302 (I in kA) und der Zellspannung 301 (U_{Z} in V) der Lithium-Ionen Batterie (positives Elektroden-Aktivmaterial: NAC; 1,3-Propensulton als Additiv) während der Schnellentladung ("Fast Discharge") und Nail-Penetration gezeigt. Zu sehen sind die Aktivierung des "Fast Discharge" (bei t = -4,5 Sekunden), die "Nail Penetration" (bei t = 0 Sekunden) und der "Shut-Down" des Separators (bei t = 20 Sekunden),

Figur 4 zeigt das Spannungs- und Strom-Verhalten (Stromstärke 302 (I in kA) und Zellspannung 301 (U_{Z} in V)) einer Lithium-Ionen Batterie ohne Beschichtung (positives Elektroden-Aktivmaterial: NAC; kein Additiv) während der Schnellentladung ("Fast Discharge") und Nail Penetration. Zu sehen sind die Aktivierung des "Fast Discharge" (bei t = -4,5 Sekunden), die "Nail Penetration" (bei t = 0 Sekunden) und der Gefährdungsfall ("Hazard-Event", bei t = 0,3 Sekunden).

Wie zu erkennen ist, trat im Fall der erfindungsgemäßen Lithium-Ionen-Batterie eine geringe Erwärmung der Zelle ein, welche durch das Schließen des Separators beendet wurde. Ein Gefährdungsfall trat nicht ein. Im Gegensatz dazu trat im Fall der Vergleichszelle ohne die erfindungsgemäße Beschichtung bereits 0,3 Sekunden nach der Nail Penetration der Gefährdungsfall ein.

## Patentansprüche

1. Lithium-Ionen-Batterie, umfassend mindestens eine Batteriezelle (2), wobei die Batteriezelle (2) je eine negative Elektrode (21), eine positive Elektrode (22), eine Elektrolytzusammensetzung (15) und einen Separator (18) umfasst, **dadurch gekennzeichnet, dass** die Lithium-Ionen-Batterie ferner mindestens eine Schnellentladungsvorrichtung (61) umfasst und die Oberfläche der negativen und/oder der positiven Elektrode (21, 22) mit einem Material beschichtet ist, welches einen elektrischen Widerstand von mehr als 0 Ω cm² und eine Lithium-Ionenleitfähigkeit von mehr als 0 S/cm aufweist und welches unter den Betriebsbedingungen der Lithium-Ionen-Batterie in der Elektrolytzusammensetzung (15) eine Löslichkeit von weniger als 1 g/L aufweist.

2. Lithium-Ionen-Batterie nach Anspruch 1, wobei das Beschichtungsmaterial mindestens ein polymerisierbares Material umfasst, welches bei Anlegen einer Spannung an die positiven und/oder der negativen Elektroden (22, 21) der Lithium-Ionen-Batterie auf der Oberfläche der positiven und/oder der negativen Elektrode (22, 21) oligomere und/oder polymere Strukturen ausbildet und so eine Beschichtungsschicht bildet, welche unter den Betriebsbedingungen der Lithium-Ionen-Batterie in der Elektrolytzusammensetzung (15) eine Löslichkeit von weniger als 1 g/L aufweist.

3. Lithium-Ionen-Batterie nach Anspruch 2, wobei das mindestens eine polymerisierbare Material ausgewählt ist aus den folgenden Verbindungen (1) bis (16):
(1) Acyclische und cyclische Kohlensäureester der allgemeinen Formeln (Ia) oder (Ib): 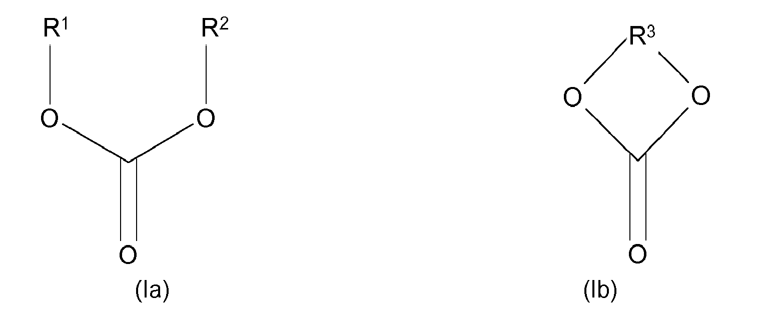 wobei R¹ und R² gleich oder verschieden sein können und für gesättigte oder ungesättigte, lineare oder verzweigte Kohlenwasserstoffketten mit 1 bis 12 Kohlenstoffatomen stehen, R³ für einen gesättigten oder ungesättigten Kohlenwasserstoffrest mit einem bis vier Kohlenstoffatomen steht und R¹, R² und R³ gegebenenfalls mit Halogenatomen, gesättigten oder ungesättigten, linearen oder verzweigten Kohlenwasserstoffresten mit 1 bis 6 Kohlenstoffatomen, welche mit Halogenatomen substituiert sein können, oder cyclischen, gesättigten oder ungesättigten Kohlenwasserstoffresten mit 3 bis 7 Kohlenstoffatomen, welche mit Halogenatomen substituiert sein können, substituiert sein können, wobei benachbarte Kohlenwasserstoffreste miteinander verbunden sein können, um so einen Ring zu bilden;
(2) Polycyclische aromatische Kohlenwasserstoffe mit 9 bis 30 Kohlenstoffatomen, wobei einzelne aromatische Ringe durch Heteroatome, ausgewählt aus O, S und N verbunden sein können;
(3) Heterocyclische aromatische Verbindungen der Formel (II): 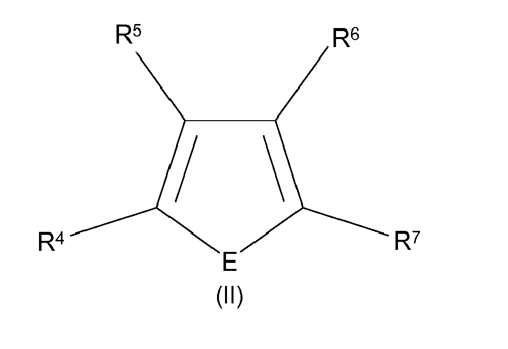 wobei E für ein Element, ausgewählt aus der Gruppe bestehend aus O, S und NR⁸, steht, R⁴ bis R⁷ jeweils für ein Wasserstoffatom, ein Halogenatom, eine Cyanogruppe, einen gesättigten oder ungesättigten Kohlenwasserstoffrest mit 1 bis 6 Kohlenstoffatomen, die mit Halogenatomen subsituiert sein können oder einen gesättigten oder ungesättigten Alkoxyrest mit 1 bis 6 Kohlenstoffatomen, die mit Halogenatomen substituiert sein können, steht, wobei benachbarte Reste R⁴ und R⁵, R⁵ und R⁶, R⁶ und R⁷ miteinander verbunden sein können, um so einen Ring zu bilden, und R⁸ für ein Wasserstoffatom oder einen gesättigten oder ungesättigten, linearen oder verzweigten Kohlenwasserstoffrest mit 1 bis 6 Kohlenstoffatomen, die mit Halogenatomen subsituiert sein können, steht;
(4) Pyridin und Pyridinderivate der Formel (III): 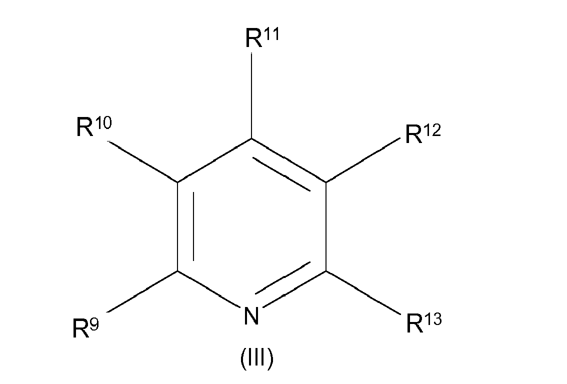 wobei R⁹ bis R¹³ unabhängig voneinander ausgewählt sein können aus einem Wasserstoffatom, einem Halogenatom, gesättigten oder ungesättigten, linearen oder verzweigten Kohlenwasserstoffresten mit 1 bis 6 Kohlenstoffatomen, und cyclischen, gesättigten oder ungesättigten Kohlenwasserstoffresten mit 3 bis 12 Kohlenstoffatomen, wobei benachbarte Kohlenwasserstoffreste miteinander verbunden sein können, um so einen Ring zu bilden;
(5) Acyclische und cyclische Sulfite der allgemeinen Formeln (IVa) und (IVb): 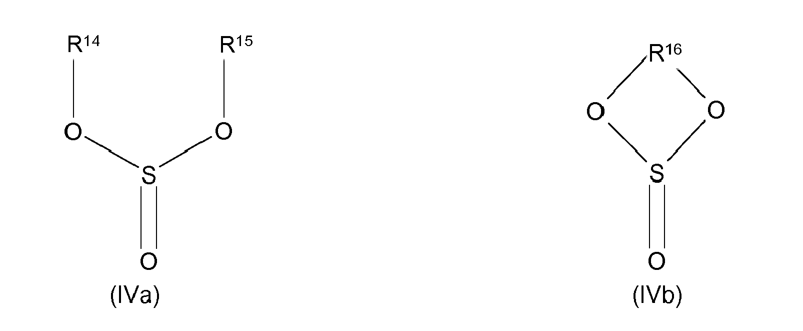 wobei R¹⁴ und R¹⁵ gleich oder verschieden sein können und für gesättigte oder ungesättigte, lineare oder verzweigte Kohlenwasserstoffketten mit 1 bis 6 Kohlenstoffatomen stehen, und R¹⁶ für einen gesättigten oder ungesättigten Kohlenwasserstoffrest mit einem bis vier Kohlenstoffatomen steht, wobei R¹⁴, R¹⁵ und R¹⁶ gegebenenfalls mit Halogenatomen, gesättigten oder ungesättigten, linearen oder verzweigten Kohlenwasserstoffresten mit 1 bis 6 Kohlenstoffatomen, welche mit Halogenatomen substituiert sein können, oder cyclischen, gesättigten oder ungesättigten Kohlenwasserstoffresten mit 3 bis 7 Kohlenstoffatomen, welche mit Halogenatomen substituiert sein können, substituiert sein können, wobei benachbarte Kohlenwasserstoffreste miteinander verbunden sein können, um so einen Ring zu bilden;
(6) Sulfonsäureester der allgemeinen Formel (V): 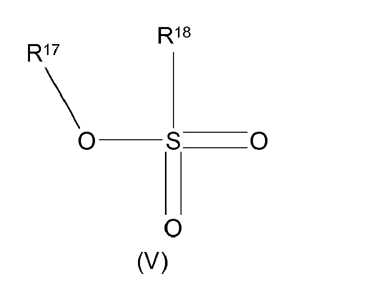 wobei R¹⁷ und R¹⁸ unabhängig voneinander lineare oder verzweigte, gesättigte oder ungesättigte Kohlenwasserstoffketten mit 1 bis 6 Kohlenstoffatomen darstellen, welche gegebenenfalls mit Halogenatomen oder Halogenalkanen mit 1 bis 5 Kohlenstoffatomen substituiert sein können;
(7) Schwefelsäureester der allgemeinen Formel (VI): 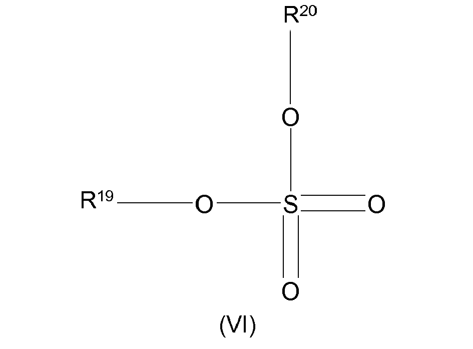 wobei R¹⁹ und R²⁰ unabhängig voneinander lineare oder verzweigte, gesättigte oder ungesättigte Kohlenwasserstoffketten mit 1 bis 6 Kohlenstoffatomen darstellen, welche gegebenenfalls mit Halogenatomen substituiert sein können;
(8) Cyclische Carbonsäurederivate der Formel (VII): 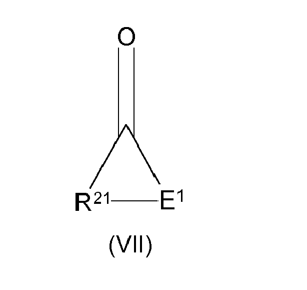 wobei E¹ für O oder NR²⁴ steht, R²¹ für eine Kohlenwasserstoffrest mit 1 bis 5 Kohlenstoffatomen oder eine Gruppe der Formel -R²²-C(O)-E²-R²³-steht, wobei R²² und R²³ je unabhängig voneinander für einen Kohlenwasserstoffgruppe mit 1 bis 2 Kohlenstoffatomen stehen, E² für O oder NR²⁴ steht und R²⁴ je unabhängig voneinander für ein Wasserstoffatom, einen linearen oder verzweigten, gesättigten oder ungesättigten Kohlenwasserstoffrest mit 1 bis 6 Kohlenstoffatomen steht, welche gegebenenfalls substituiert sein können mit Halogenatomen, Kohlenwasserstoffresten mit 1 bis 6 Kohlenstoffatomen oder Resten der Formel -C(O)R²⁵, steht, wobei R²⁵ für einen linearen oder verzweigten, gesättigten oder ungesättigten Kohlenwasserstoffrest mit 1 bis 6 Kohlenstoffatomen steht;
(9) Acyclische ungesättigte Carbonsäurederivate der allgemeinen Formel (VIII) 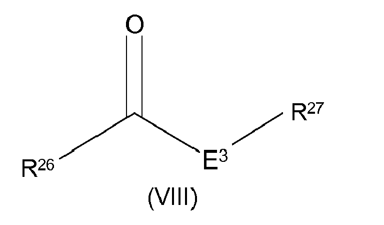 wobei R²⁶ für Wasserstoff, ein Halogenatom oder einen gesättigten oder ungesättigten, aromatischen oder aliphatischen, linearen oder verzweigten Kohlenwasserstoffrest mit 1 bis 12 Kohlenstoffatomen, welche mit Halogenatomen substituiert sein können, und R²⁷ für einen gesättigten oder ungesättigten, lineare oder verzweigten Kohlenwasserstoffrest mit 1 bis 12 Kohlenstoffatomen steht und E³ für O oder NR²⁸ steht und R²⁸ und R²⁷ unabhängig voneinander dieselbe Bedeutung haben;
(10) Carbonsäureanhydride und Carbonsäureimide der Formeln (IXa) und (IXb): 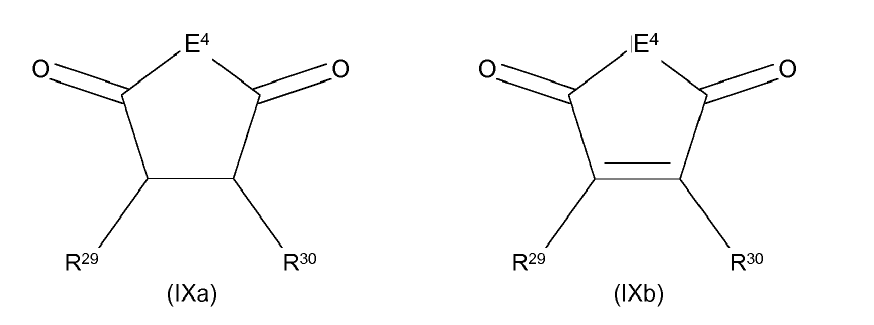 wobei E⁴ die Bedeutung O oder NR³¹ hat, R²⁹ und R³⁰ unabhängig voneinander ausgewählt sein könne aus Wasserstoffatomen, Halogenatomen und linearen oder verzweigten, gesättigten oder ungesättigten Kohlenwasserstoffresten mit 1 bis 6 Kohlenstoffatomen, welche gegebenenfalls mit Halogenatomen substituiert sein können, und R³¹ ein Wasserstoffatom oder einen linearen oder verzweigten, gesättigten oder ungesättigten Kohlenwasserstoffrest mit 1 bis 6 Kohlenstoffatomen darstellt;
(11) Verbindungen der Formel (X) 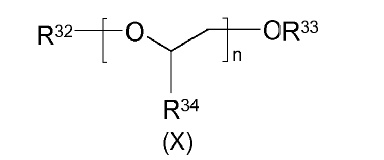 wobei n für eine ganze Zahl von 1 bis 10 steht, R³² und R³³ unabhängig voneinander für einen linearen oder verzweigten, gesättigten oder ungesättigten Kohlenwasserstoffrest mit 1 bis 6 Kohlenstoffatomen stehen und R³⁴ für eine Methylrest, einen Ethylrest, einen n-Propylrest oder einen iso-Propylrest steht;
(12) Organische Nitrile der Formel (XI):
R³⁵-CN (XI)
wobei R³⁵ einen linearen, gesättigten oder ungesättigten Kohlenwasserstoffrest mit 1 bis 6 Kohlenstoffatomen, darstellt, der gegebenenfalls mit mindestens einer Cyanogruppe subsituiert sein kann;
(13)Organische Phosphate der Formel (XII):
(O)P(OR³⁶)(OR³⁷)(OR³⁸) (XII)
wobei R³⁶ bis R³⁸ unabhängig voneinander aliphatische oder aromatische Kohlenwasserstoffrest mit 1 bis 6 Kohlenstoffatomen darstellen, welche gegebenenfalls mit einem oder mehreren Halogenatomen substituiert sein können;
(14)Organische Borate der Formel (XIII):
Mt[B(OR³⁹)(OR⁴⁰)(OR⁴¹)(OR⁴²)] (XIII)
wobei Mt für ein einwertiges Metallkation, bevorzugt Lithium, steht, und R³⁹ bis R⁴² unabhängig voneinander aliphatische oder aromatische Kohlenwasserstoffreste mit 1 bis 6 Kohlenstoffatomen darstellen, welche gegebenenfalls mit einem oder mehreren Halogenatomen substituiert sein können, oder Carbonylgruppen mit 1 bis 6 Kohlenstoffatomen darstellen, welche gegebenenfalls mit einem oder mehreren Halogenatomen substituiert sein können;
(15) Organische Dialkyldicarbonate der Formel (XIV): 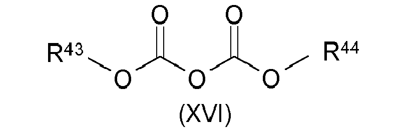 wobei R⁴³ und R⁴⁴ unabhängig voneinander ausgewählt sein können aus linearen oder cyclischen, gesättigten oder ungesättigten Kohlenwasserstoffresten mit 1 bis 6 Kohlenstoffatomen;
und
(16)Anorganische Verbindungen der Formeln CO₂, N₂O, SO₂, CS₂ und Sₓ²⁻ (insbesondere S₈²⁻).
wobei die Verbindungen (1) bis (16) einzeln oder in Kombination miteinander verwendet werden können.

4. Lithium-Ionen-Batterie nach einem der Ansprüche 1 bis 3, wobei die positive Elektrode (22) mindestens ein positives Aktivmaterial (42) umfasst, welches ein zusammengesetztes Oxid, das mindestens ein Metall, ausgewählt aus der Gruppe bestehend aus Kobalt, Magnesium und Nickel, sowie Lithium, enthält, umfasst.

5. Lithium-Ionen-Batterie nach Anspruch 4, wobei das positive Aktivmaterial (42) eine Verbindung der Formel LiNi₁₋ₓM'ₓO₂ mit x ≤ 0,5 umfasst und wobei M' ausgewählt ist aus Co, Mn, Cr und Al.

6. Verfahren zur Herstellung einer Lithium-Ionen-Batterie, umfassend mindestens eine Schnellentladungsvorrichtung (61) und mindestens eine Batteriezelle (2), wobei das Verfahren die folgenden Schritte umfasst:
(a) Beschichten der Oberfläche einer positiven und/oder einer negativen Elektrode (22, 21) mit einem Beschichtungsmaterial, welches mindestens ein Material umfasst, das bei Betriebstemperatur der Lithium-Ionen-Batterie eine Löslichkeit in der Elektrolytzusammensetzung (15) von weniger als 1 g/L aufweist;
(b) Zusammenfügen der in Schritt (a) erhaltenen, gegebenenfalls beschichteten negativen und positiven Elektroden (21, 22) mit mindestens den weiteren Bestandteilen Separator (18) und Elektrolytzusammensetzung (15), umfassend mindestens ein aprotisches Lösungsmittel und mindestens ein Lithiumsalz, um so eine Batteriezelle (2) zu erhalten;
(c) Zusammenfügen der in Schritt (b) erhaltenen Batteriezelle (2) mit mindestens einer Schnellentladungsvorrichtung (61) sowie gegebenenfalls weiteren Batteriezellen, um so eine Lithium-Ionen-Batterie zu erhalten;
(d) Mindestens einmaliges Aufladen und Entladen der so erhaltenen Batterie, um die Lithium-Ionen-Batterie zu Formieren.

7. Verfahren zur Herstellung einer Lithium-Ionen-Batterie nach Anspruch 6, wobei die Elektrolytzusammensetzung (15) ferner mindestens ein Elektrolyt-Additiv, ausgewählt aus den Verbindungen (1) bis (16) nach Anspruch 3 umfasst.

8. Verfahren zur Herstellung einer Lithium-Ionen-Batterie, umfassend mindestens eine Schnellentladungsvorrichtung (61) und mindestens eine Batteriezelle (2), wobei das Verfahren die folgenden Schritte umfasst:
(a) Zusammenfügen der Bestandteile negative Elektrode (21), positive Elektrode (22), Separator (18) und Elektrolytzusammensetzung (15), um so eine Batteriezelle (2) zu erhalten, wobei die Elektrolytzusammensetzung (15) mindestens ein Elektrolyt-Additiv, ausgewählt aus den Verbindungen (1) bis (16) nach Anspruch 3, umfasst;
(b) Zusammenfügen der in Schritt (a) erhaltenen Batteriezelle (2) mit mindestens einer Schnellentladungsvorrichtung (61) sowie gegebenenfalls weiteren Batteriezellen (2), um eine Lithium-Ionen-Batterie zu erhalten;
(c) Mindestens einmaliges Aufladen und Entladen der so erhaltenen Batterie, um die Lithium-Ionen-Batterie zu Formieren und so eine Beschichtungsschicht auf der Oberfläche der positiven und/oder der negativen Elektrode (22, 21) zu bilden, wobei diese Schicht elektrochemische Reaktionsprodukte der in Schritt (a) zugegebenen Verbindungen (1) bis (16) umfasst.

9. Lithium-Ionen-Batterie umfassend mindestens eine Schnellentladungsvorrichtung (61) und mindestens eine Batteriezelle (2), hergestellt nach dem Verfahren nach einem der Ansprüche 6 bis 8

10. Verwendung einer Elektrolytzusammensetzung (15), umfassend mindestens ein aprotisches Lösungsmittel, mindestens ein Lithiumsalz und mindestens ein Elektrolyt-Additiv, ausgewählt aus den Verbindungen (1) bis (16) gemäß Anspruch 4 in einer Lithium-Ionen-Batterie, umfassend mindestens eine Schnellentladungsvorrichtung (61) und mindestens eine Batteriezelle (2), wobei die Batteriezelle (2) je eine negative Elektrode (21), eine positive Elektrode (22), eine Elektrolytzusammensetzung (15) und einen Separator (18) umfasst.
